(19) Europäisches Patentamt
European Patent Office
Office européen des brevets

(11) **EP 2 156 235 B1**

(12) **EUROPÄISCHE PATENTSCHRIFT**

(45) Veröffentlichungstag und Bekanntmachung des Hinweises auf die Patenterteilung:
**30.08.2017   Patentblatt 2017/35**

(51) Int Cl.:
***G02B 21/00*** *(2006.01)*       ***G02B 21/06*** *(2006.01)*

(21) Anmeldenummer: **08785042.6**

(22) Anmeldetag: **24.07.2008**

(86) Internationale Anmeldenummer:
**PCT/EP2008/006089**

(87) Internationale Veröffentlichungsnummer:
**WO 2009/043404 (09.04.2009 Gazette 2009/15)**

(54) **MIKROSKOP UND VERFAHREN ZUM BETREIBEN EINES MIKROSKOPS**

MICROSCOPE AND METHOD FOR OPERATING A MICROSCOPE

MICROSCOPE ET PROCÉDÉ POUR FAIRE FONCTIONNER UN MICROSCOPE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **28.09.2007   DE 102007046470**
**22.07.2008   DE 102008034137**

(43) Veröffentlichungstag der Anmeldung:
**24.02.2010   Patentblatt 2010/08**

(73) Patentinhaber: **Carl Zeiss Microscopy GmbH**
**07745 Jena (DE)**

(72) Erfinder:
• **KLEPPE, Ingo**
**07749 Jena (DE)**
• **LIEDTKE, Mirko**
**07745 Jena (DE)**

(74) Vertreter: **Schiffer, Axel Martin et al**
**Weber & Heim Patentanwälte**
**Partnerschaftsgesellschaft mbB**
**Irmgardstrasse 3**
**81479 München (DE)**

(56) Entgegenhaltungen:
**EP-A- 0 564 178          EP-A- 1 681 589**
**DE-A1- 19 957 418       US-A- 5 923 466**
**US-A1- 2002 109 840**

## Beschreibung

Die Erfindung bezieht sich in einem ersten Aspekt auf ein Verfahren zum Betreiben eines Mikroskops nach dem Oberbegriff des Anspruchs 1 und auf ein Mikroskop nach dem Oberbegriff des Anspruchs 22.

Ein gattungsgemäßes Verfahren und ein gattungsgemäßes Mikroskop sind beispielsweise aus EP 0 977 069 B1 bekannt. Bei einem Verfahren der genannte Art wird Anregungslicht auf oder in verschiedene Punkte einer Probe fokussiert oder gestrahlt, eine Intensität des Anregungslichts wird punktspezifisch variiert und eine Intensität von von der Probe zurückgestrahltem Licht wird in mindestens einem spektralen Bereich punktspezifisch und quantitativ gemessen.

Ein gattungsgemäßes Mikroskop weist folgende Komponenten auf: eine Lichtquelle zum Aussenden von Anregungslicht zum mikroskopischen Untersuchen einer Probe, einen Intensitätsmodulator zum Variieren einer Intensität des Anregungslichts, eine Mikroskopoptik zum Leiten des Anregungslichts auf verschiedene Punkte der zu untersuchenden Probe und zum Leiten von von den verschiedenen Punkten der Probe zurückgestrahltem Licht auf einen Detektor und den Detektor zum punktspezifischen und quantitativen Nachweis einer Intensität des von der Probe zurückgestrahlten Lichts in mindestens einem spektralen Bereich.

Der Dynamikbereich heutiger Photodetektoren ist besonders für die Laserscanning-Mikroskopie häufig unzureichend, um gleichzeitig einerseits sehr feine und dunkle Strukturen und andererseits sehr helle Bildbereiche gleichermaßen empfindlich aufzulösen. In der Fluoreszenzmikroskopie sind daher Teile des Bilds häufig übersteuert und/oder andere Teile sind nicht mehr vom Hintergrundrauschen zu unterscheiden.

Weiterhin ist die Photoschädigung von Zellen und Gewebe durch intensive Beleuchtung bis heute einer der Schlüsselfaktoren, der maßgeblich die Anzahl der möglichen Bildaufnahmen von lebenden Zellen und damit die Messzeit limitiert, siehe: Koester H.J., Baur, D. Uhl, R. und Hell, S.W. (1999), Biophys. J., 77(4): 2226-2236; Hopt, A. und Neher, E. (2001), Biophys. J., 80 (4) 2029-2036.

Im Bereich der Laserscanning-Mikroskopie steht man somit oft an den Grenzen des Machbaren, wenn es um die Minimierung von Bleicheffekten und Optimierung der Detektoraussteuerung geht. Besonders gut werden diese Probleme zwar beim Prinzip der Photonenzählung adressiert, wobei hierbei die Vorteile eines hohen Signal-Rauschabstands jedoch mit vergleichsweise geringer Dynamik erkauft werden. Ab einer Zählrate von etwa 10 Mhz wird die Zählung nichtlinear und ist ab etwa 30 Mhz auch kaum noch zu korrigieren. Ein Benutzer muss deshalb ständig die Beleuchtung der Probe in einem optimalen Bereich halten, nicht zuletzt deshalb, um den unter maximaler Hochspannung betriebenen Photomultiplier vor Zerstörung zu schützen.

Zur Erweiterung des Dynamikbereichs stehen heute im Wesentlichen drei Techniken zur Verfügung. Zum einen können bessere Detektoren, beispielsweise also Kameras mit einem extrem hohen Dynamikbereich verwendet werden. Allerdings werden für die Mikroskopie heute Dynamiktiefen von 16 Bit bisher kaum erreicht. Die Verwendung hochsensitiver CCD-Kameras mit einem extrem großen Dynamikbereich kommt in der Laserscanning-Mikroskopie aufgrund von Streulicht kaum zum Einsatz.

Das Problem des unzureichenden Dynamikbereichs kann weiterhin in vergleichsweise einfacher Form mit mehreren Bildern umgangen werden, die bei unterschiedlicher Belichtung aufgenommen und anschließend verrechnet werden. Nachteil dieser Methode ist nicht nur die wesentlich größere Probenbelastung, sondern auch die benötigte Aufnahmezeit. Für viele Anwendungen, besonders bei Messungen an lebenden Zellen, ist dies nicht möglich oder jedenfalls nicht optimal.

Schließlich wurde ein Verfahren mit der Bezeichnung "Controlled Light Exposure Microscopy", auch als CLEM abgekürzt, in WO 2004/102249 A1 vorgeschlagen. Für die Laserscanning-Mikroskopie wird dabei während der scannenden Bildaufnahme in einer schnellen rückgekoppelten Regelung pixelgenau die Belichtungszeit geregelt, indem bei Erreichen eines bestimmten Schwellwerts im Detektor die Beleuchtung für das jeweilige Pixel ausgeschaltet und die Belichtung somit abgebrochen wird.

Auch zur Reduktion der Photoschädigung und des Bleichens wurden bereits einige Möglichkeiten der Abhilfe vorgeschlagen. Photoschädigung bei der Messung an lebenden Zellen kann zum einen durch Anregung anderer Moleküle als der des Farbstoffs erfolgen, siehe: Koester H.J., Baur, D. Uhl, R. und Hell, S.W. (1999), Biophys. J., 77(4): 2226-2236. Zum anderen erfolgt eine Photoschädigung aber auch durch die Anregung des Farbstoffs selbst, der nach einer gewissen Anzahl von Anregungszyklen in toxische Produkte zerfällt. Es existieren verschiedene methodische Ansätze zur Reduktion des Bleichens der Farbstoffe und um Photoschädigung der Probe zu vermeiden. Beispielsweise können Verbesserungen erreicht werden durch Veränderung beziehungsweise Optimierung der Farbstoffe. Weiterhin können im Bereich der Objektpräparation Optimierungen durchgeführt werden. Darüber hinaus sind Verbesserungen im Bereich der Detektion und der Anregung möglich. Für die Erfindung wesentlich ist die Verbesserung der Anregung, für welche im Wesentlichen zwei technische Ansätze zum Reduzieren des Bleichens bisher bekannt sind. Zum einen ist dies die bereits angesprochene "Controlled Light Exposure Microscopy", zum anderen wurde ein als "T-REX-Beleuchtung" bezeichnetes Verfahren vorgeschlagen. Hierbei handelt es sich um ein Verfahren zur gepulsten Laserbeleuchtung, wobei die Pulsrate für die Anregung auf eine Relaxationszeit der Farbstoffe aus Triplettzuständen angepasst wird, siehe: Donnert, G., Eggeling, C. und Hell, S.W. (2007), Nat. Methods, 4(1); 81-86.

Ein gattungsgemäßes Verfahren und ein gattungsgemäßes Mikroskop ist außerdem beschrieben in OPTICS LETTERS, Vol. 32, No. 19, October 1, 2007.

In DE 199 57 418 A1 werden ein Verfahren zur lichtoptischen Abtastung eines Objekts und ein Rastermikroskop zur Anwendung des Verfahrens beschrieben. Dabei ist vorgesehen, während des Abrasterns des Objekts die Lichtintensität abhängig von der jeweiligen Position zu verändern. EP 1 681 589 A1 handelt von einem Mikroskop, bei dem mit einem Laserlichtstrahl eine zu untersuchende Probe abgerastert wird. Über einen AOTF ist eine Intensitätsregelung des Abtastungslichtstrahls möglich. Inhalt von US 2002/0109840 A1 ist ein Verfahren zur optischen Erfassung von charakteristischen Größen des wellenlängenabhängigen Verhaltens einer beleuchteten Probe. In EP 0 564 178 A1 wird ein konfokales Mikroskop beschrieben, bei welchem eine Probe mit einem UV-Lichtstrahl abgerastert wird. Das im sichtbaren Lichtbereich emittierte Fluoreszenzlicht wird mit einem Detektor detektiert. US 5,923,466 handelt von einem konfokalen Bildgebungssystem, bei dem eine Lichtquelle zum Aussenden von Licht in Richtung einer zu untersuchenden Probe vorhanden ist, bei dem ein Detektor zur Detektion des von der Probe zurückgestrahlten Lichtsignals vorhanden ist und bei dem aus den detektierten Signalen ein Bild berechnet wird.

**Aufgabe** der Erfindung ist, ein Mikroskop und ein Verfahren zum Betreiben eines Mikroskops anzugeben, bei welchem einerseits der Dynamikbereich erweitert werden kann und andererseits die Photoschädigung der zu untersuchenden Präparate, insbesondere von lebenden Zellen, sowie das Bleichen von Farbstoffen zu reduzieren.

Diese Aufgabe wird in einem ersten Gesichtspunkt durch das Verfahren mit den Merkmalen des Anspruchs 1 und durch das Mikroskop mit den Merkmalen des Anspruchs 22 gelöst.

Das Verfahren der oben genannten Art ist erfindungsgemäß dadurch weitergebildet, dass die Intensität und/oder eine spektrale Zusammensetzung des in einen bestimmten Punkt der Probe eingestrahlten Anregungslichts mit einer Regeleinrichtung abhängig von einer zuvor aus Messdaten der Probe bereitgestellten Information über eine voraussichtliche oder tatsächliche Intensität des von diesem Punkt in dem spektralen Bereich zurückgestrahlten Lichts so eingestellt wird, dass ein Integral der Intensität des von diesem Punkt in dem spektralen Bereich zurückgestrahlten Lichts über eine Pixelverweilzeit innerhalb eines festzulegenden Werteintervalls liegt.

Das Mikroskop der oben genannten Art ist erfindungsgemäß dadurch weitergebildet, dass eine Regelungseinrichtung vorhanden ist, die mit dem Intensitätsmodulator und dem Detektor zusammenwirkt und die Intensität und/oder eine spektrale Zusammensetzung des auf einen Punkt der Probe eingestrahlten Anregungslichts abhängig von einer zuvor aus Messdaten der Probe bereitgestellten Information über eine voraussichtliche oder tatsächliche Intensität des von diesem Punkt in dem spektralen Bereich zurückgestrahlten Lichts so einstellt, dass ein Integral der vom Detektor für diesen Punkt nachgewiesenen Intensität des in dem spektralen Bereich zurückgestrahlten Lichts über eine Pixelverweilzeit innerhalb eines festzulegenden Werteintervalls liegt.

Bevorzugte Varianten der erfindungsgemäßen Verfahren sowie vorteilhafte Ausführungsbeispiele der erfindungsgemäßen Mikroskope sind Gegenstand der abhängigen Ansprüche und sind darüber hinaus im Folgenden näher beschrieben.

Als Kerngedanke der Erfindung kann angesehen werden, im Unterschied zum Verfahren der "Controlled Light Exposure Microscopy" nicht mehr für die gesamte Probe im Wesentlichen mit ein- und derselben Intensität zu arbeiten, sondern die Intensität der Beleuchtung der Probe räumlich den optischen Eigenschaften der Probe anzupassen.

Eine wesentliche Erkenntnis der Erfindung besteht darin, dass aufgrund der nichtlinearen Abhängigkeit von Schädigungsprozessen von der Intensität, erhebliche Verbesserungen im Hinblick auf die Probenschädigung durch eine gezielte Anpassung der Anregungsintensität erreicht werden können.

Eine zweite wesentliche Erkenntnis der Erfindung kann darin gesehen werden, dass durch Verlagerung der dynamischen Variierung auf die Anregungsseite, eine eventuell unzureichende Dynamiktiefe des eingesetzten Detektors prinzipiell völlig unwichtig wird und vernachlässigt werden kann. Es können deshalb gezielt Detektoren mit besonders gutem Signal/Rauschverhältnis gewählt werden.

Mit der vorliegenden Erfindung wird deshalb ein Bildaufnahmeverfahren bereitgestellt, welches erhebliche Verbesserungen bei der Dynamiktiefe der erzielten Bilder sowie außerdem deutliche Reduzierungen der insbesondere für die Untersuchung von lebenden Proben limitierenden Schädigungs- und Ausbleichprozesse ermöglicht.

Als Anregungslicht wird im Zusammenhang mit der hier beschriebenen Erfindung jede Art von elektromagnetischer Strahlung verstanden, die für die Mikrokopie eingesetzt wird. Diese Strahlung kann, muss aber nicht, im sichtbaren Bereich liegen.

Als Lichtquelle kann prinzipiell jede Art von Strahlungsquelle für die elektromagnetische Strahlung im gewünschten Spektralbereich verwendet werden. Bevorzugt werden hierbei geeignete Laser eingesetzt.

Bei dem von der Probe zurückgestrahltem Licht kann es sich prinzipiell um jede Art von elektromagnetischem Response der Probe aufgrund der vorausgehenden Anregung durch die Anregungsstrahlung handeln. Hierbei können unterschiedliche kontrastgebende Prinzipien ausgenutzt werden. Beispielsweise kann es sich um reflektierte oder gestreute Strahlung handeln. Insbesondere kann es sich um Fluoreszenzstrahlung, um Zwei-Photonen-Fluoreszenz oder um Raman-Streuung, beispielsweise Strahlung aus einem CARS-Prozess handeln.

Der Begriff Punkt wird hier nicht im mathematischen Sinn verstanden, sondern bezeichnet ein Fokalvolumen in der Größenordnung wie es etwa mit typischen Mikroskop-Optiken erreicht werden kann. Durch das Anregungslicht werden dann beispielsweise die im fraglichen Fokalvolumen befindlichen Farbstoffmoleküle angeregt und senden nach Relaxation die jeweils typischen Fluoreszenzphotonen aus. Als Detektor können grundsätzlich alle in den jeweiligen Spektralbereichen einsetzbaren Detektoren verwendet werden. Aufgrund des extrem guten Signal/Rauschverhältnisses werden bevorzugt Photomultiplier eingesetzt. Hierbei kann es sich auch um Mehrfachdetektoren, in der Art von Multi-Channel-Plates, handeln. Auch andere ortsauflösende Detektoren, wie beispielsweise CCD- oder sonstige Halbleiter-Arrays, können verwendet werden.

Bei einer bevorzugten Variante des erfindungsgemäßen Verfahrens stellt die Regeleinrichtung die Intensität des Anregungslichts für einen bestimmten Punkt nur dann so ein, dass das Integral der Intensität des von diesem Punkt zurückgestrahlten Lichts über eine Pixelverweilzeit innerhalb eines vorbestimmten Werteintervalls liegt, wenn für diesen Punkt ein Signalkriterium erfüllt ist.

In einer weiteren bevorzugten Variante des erfindungsgemäßen Verfahrens sendet die Lichtquelle zum Anregen einer Mehrzahl von unterschiedlichen Farbstoffen Anregungslicht bei einer Mehrzahl von Wellenlängen aus und eine Mehrzahl von Detektoren zum quantitativen und punktspezifischen Nachweis des von der Probe zurückgestrahlten Lichts in einer Mehrzahl von spektralen Bereichen ist vorhanden.

Bei einer weiteren bevorzugten Variante des erfindungsgemäßen Verfahrens stellt die Regeleinrichtung die auf einen bestimmten Punkt eingestrahlte Intensität des Anregungslichts auf Grundlage einer für diesen Punkt in einem vorhergehenden Bild ermittelten Intensität des zurückgestrahlten Lichts ein.

Bei einer bevorzugten Variante des erfindungsgemäßen Verfahrens wird das Werteintervall für das Integral der Intensität des von einem Punkt zurückgestrahlten Lichts über die Pixelverweilzeit so festgelegt, dass ein verwendeter Detektor bei möglichst guter Empfindlichkeit und bei möglichst gutem Signal-Rauschverhältnis betrieben wird. Durch Verlagerung auf die Anregungsseite ist man nicht mehr durch eine reduzierte Dynamiktiefe des verwendeten Detektors beschränkt und man kann das fragliche Werteintervall gezielt so einstellen, dass der Detektor in einem günstigen Bereich betrieben wird.

Grundsätzlich kann das Werteintervall aber auch eine an eine ausnutzbare Dynamiktiefe des Detektors angepasste Breite aufweisen. Bei einer besonders bevorzugten und einfachen Variante wird die Regelung jedoch so durchgeführt, dass das Integral der Intensität des von einem Punkt zurückgestrahlten Lichts über eine Pixelverweilzeit, insbesondere für alle Punkte, welche ein Signalkriterium erfüllen, konstant ist. Das Zurückrechnen, beispielsweise auf eine interessierende Farbstoff-Konzentration im betrachteten Fokalvolumen, ist dann vergleichsweise einfach.

Vorteilhaft ist weiterhin, wenn die Regelung so durchgeführt wird, dass die Intensität des Anregungslichts für einen bestimmten Punkt über eine Pixelverweilzeit nach einer Einschwingphase der Regelung weitestgehend konstant bleibt. Wegen der nichtlinearen Abhängigkeit von Schädigungsprozessen kann so die Probenschädigung auf einem möglichst geringen Niveau gehalten werden.

Grundsätzlich kann die Regeleinrichtung die in einen bestimmten Punkt eingestrahlte Intensität des Anregungslichts für alle Punkte so einstellen, dass das Intensitätsintegral des zurückgestrahlten Lichts innerhalb des festgelegten Werteintervalls liegt. Besonders bevorzugt ist aber eine Verfahrensvariante, bei der die Regeleinrichtung die Intensität des Anregungslichts für einen bestimmten Punkt nur dann so einstellt, dass das Integral der Intensität des von diesem Punkt zurückgestrahlten Lichts über eine Pixelverweilzeit innerhalb eines vorbestimmten Werteintervalls liegt, wenn für diesen Punkt ein Signalkriterium erfüllt ist. So kann vermieden werden, dass bei Punkten, bei denen zum Beispiel die Intensität des zurückgestrahlten Lichts sehr gering ist, die Intensität des Anregungslichts sehr hoch geregelt wird und hierdurch, beispielsweise in benachbarten Probenbereichen, Schädigungsprozesse ausgelöst werden.

Bei einer weiteren bevorzugten Variante wird für alle Punkte dieselbe Pixelverweilzeit verwendet. Die Auswertung, beispielsweise im Hinblick auf eine interessierende Farbstoffkonzentration, gestaltet sich dann wiederum vergleichsweise einfach. Prinzipiell kann aber auch für unterschiedliche Punkte mit verschiedenen Pixelverweilzeiten gearbeitet werden. Beispielsweise kann es zweckmäßig sein, nur für alle Punkte, welche ein Signalkriterium erfüllen, dieselbe Pixelverweilzeit zu verwenden. Insbesondere kann für Punkte, welche das Signalkriterium nicht erfüllen, die Pixelverweilzeit verkürzt werden. Die Aufnahmezeit für ein Bild oder ein Scan wird dadurch ebenfalls verkürzt und die Bildaufnahmerate kann erhöht werden.

Grundsätzlich kann das Signalkriterium als punktspezifisches Signal extern zugeführt werden, das heißt, dass das Signalkriterium für einen bestimmten Punkt erfüllt ist, wenn ein extern zugeführtes punktspezifisches Signal einen festzulegenden Wert aufweist.

Bei einer besonders bevorzugten Ausgestaltung des erfindungsgemäßen Verfahrens wird als Signalkriterium eine Messinformation des fraglichen Punkts verwendet. Das Signalkriterium ist dann für einen bestimmten Punkt erfüllt, wenn die voraussichtliche oder tatsächliche Intensität des von diesem Punkt zurückgestrahlten Lichts oberhalb einer festzulegenden Hintergrundschwelle liegt.

Auf diese Weise wird nur bei den Punkten, bei denen tatsächlich signifikante Intensitäten, beispielsweise von dort vorhandenen Farbstoffen, zurückgestrahlt werden, die Anregungsintensität hochgeregelt. Die die Probe schädigenden Prozesse können auf diese Weise weiter reduziert werden.

Weitere Varianten des erfindungsgemäßen Verfahrens können grundsätzlich unterschieden werden im Hinblick auf den Zeitpunkt oder das Zeitintervall zu dem bzw. innerhalb dessen die Beleuchtungsregelung durchgeführt wird. Beispielsweise kann diese Regelung bereits während der Belichtung eines einzelnen Bildpunkts, also innerhalb einer Pixelverweilzeit, durchgeführt werden. Weiterhin ist eine solche Regelung innerhalb eines Scanvorgangs möglich. Insbesondere kann hierbei die notwendige Information über das voraussichtlich zurückgestrahlte Licht aus Messungen von direkt oder indirekt benachbarten Punkten bezogen werden. Dies wird im Folgenden noch näher erläutert. Schließlich kann die fragliche Regelung zwischen einzelnen Bildern bei der Aufnahme von Zeitreihen durchgeführt werden, wobei aus den zuvor aufgenommenen Bildern bereits gesammelte Informationen über die Probe verwendet werden, im einfachsten Fall in der Art eines Negativ-Bilds.

Beispielsweise kann zum groben Ermitteln einer Intensität des von einzelnen Punkten zurückgestrahlten Lichts ein Testbild oder ein Testscan aufgenommen werden. Dadurch wird die erfindungsgemäß notwendige Information über eine voraussichtliche Intensität des von einem fraglichen Punkt zurückgestrahlten Licht bereitgestellt. Ein solcher Testscan oder ein Testbild kann entfallen, wenn die Information über die voraussichtliche Intensität des von einem Punkt zurückgestrahlten Lichts durch eine anfängliche Messung der Intensität des von diesem Punkt zurückgestrahlten Lichts bereitgestellt wird. Hierbei wird zu Beginn einer Pixelverweilzeit die Intensität des zurückgestrahlten Lichts gemessen. Voraussetzung hierfür ist, dass die Regelung hinreichend schnell arbeitet und innerhalb einer Pixelverweilzeit die richtige Intensität einstellen kann. Es wird demgemäß die Intensität des in diesem Punkt eingestrahlten Anregungslichts während der Verweildauer des Anregungsstrahls auf diesem Punkt nachgeführt.

Für eine Regelung der Beleuchtung innerhalb einer Belichtungszeit, also innerhalb einer Pixelverweilzeit, wird die Beleuchtung für jeden Bildpunkt dynamisch in einer schnellen Rückkopplung geregelt, welche die bereits gesammelte Information, also Messdaten der Probe, berücksichtigt. Das Bild wird sodann nicht wie üblich nur über die detektierte Intensität konstruiert, sondern auch über die verwendete Beleuchtungsleistung und Belichtungszeit oder eine Kombination hieraus. Die Unterschiede in der Beleuchtung zwischen der konventionellen Bildgebung, dem CLEM-Verfahren und der hier vorgestellten Erfindung, welche auch als DIM-Verfahren bezeichnet wird, werden nachstehend im Einzelnen beschrieben.

Die gemessene Intensität im Detektor ist bei Einzelphotonenanregung proportional zu dem Produkt aus der Farbstoffkonzentration und der Beleuchtungsleistung sowie bei Zwei-Photonen-Anregung zum Quadrat der Beleuchtungsleistung. Bei konventioneller Beleuchtung ist die Beleuchtungsleistung räumlich und zeitlich konstant für alle Pixel im Bild:

$$I(x,t) \propto p \cdot \int_0^t c(x,t') dt'$$

wobei I die detektierte Fluoreszenz, x den Ortsvektor, t die Zeit und p die eingestrahlte Beleuchtungsleistung beschreiben. Im CLEM-Verfahren wird nun die Integrationsgrenze räumlich variiert, die Beleuchtungsleistung als solche aber weiterhin räumlich konstant gehalten.

$$I(x,t) \propto p \cdot \int_0^{t(x)} c(x,t') dt'$$

Im DIM-Verfahren jedoch kann die Integrationsgrenze konstant gehalten werden. Die Beleuchtungsleistung wird jedoch räumlich und zeitlich beliebig verändert.

$$I(x,t) \propto \int_0^t c(x,t') \cdot p(x,t') dt'$$

Das DIM-Verfahren kann insoweit als Weiterentwicklung des CLEM-Verfahrens betrachtet werden, welche beträchtliche Vorteile bietet. Die über das oben genannte Patent beschriebenen Funktionen zur Beleuchtung sind, wie in Gleichung (2) beschrieben, Stufenfunktionen, da bei Erreichen eines Schwellwerts die Beleuchtung von einer Konstanten auf Null gesetzt wird. Im Gegensatz dazu betrachtet das erfindungsgemäße DIM-Verfahren beliebige Beleuchtungsfunktionen innerhalb einer insbesondere fixen Belichtungszeit. Der besondere Vorteil gegenüber dem CLEM-Verfahren liegt zum einen in der wesentlich größeren Reduktion des Bleichens und der Photoschädigung aufgrund der Abhängigkeit der Schädigung mit einem exponentiellen Faktor $\alpha$, der deutlich größer ist als 1, siehe Hopt A. und Neher E., Biophys., J. 80(4): 2029-2036, Dixit und Cyr, The Plant Journal (2003) 36, 280-290.

$$D(x,t) \propto \int_V \int_0^t p(x,t')^\alpha dt' dV$$

Beispielsweise verringert eine Halbierung der Laserleistung die Photoschädigung um mehr als einen Faktor 5, wenn der Faktor $\alpha$ etwa 2,5, wie in einer Reihe von Experimenten für Zwei-Photonen-Anregung ermittelt, beträgt.

Der wesentliche Unterschied des hier vorgestellten erfindungsgemäßen Verfahrens im Vergleich zur CLEM-Technik besteht somit darin, diese nichtlineare Abhängigkeit von Schädigungs- und Ausgleichprozessen von der eingestrahlten Intensität mit einem Exponenten von deutlich größer 1 insoweit zu nutzen, als man möglichst die gesamte Pixelverweilzeit ausnützt und hierbei mit einer möglichst kleinen Beleuchtungsleistung arbeitet.

Darüber hinaus ist die Reduktion des Dynamikbereichs bei Verlagerung auf die Anregungsseite in der Zwei-Photonen-Mikroskopie erheblich größer als beim CLEM-Verfahren, bei dem durch die konstante Laserleistung der Dynamikbereich von etwa fünf Größenordnungen auf die Belichtungszeit 1:1 abgebildet wird. Beim DIM-Verfahren reduziert sich der Dynamikbereich auf der Anregungsseite aufgrund der Nichtlinearität mit der Quadratwurzel. Das heißt, dass man anregungsseitig nur drei Größenordnungen überstreichen muss, um sechs Größenordnungen im Fluoreszenzsignal zu steuern. Um feine Strukturen mit dem CLEM-Verfahren aufzulösen, muss die für das gesamte Bild verwendete konstante Laserleistung auf die dunkelsten Stellen optimiert sein, was zur Folge hat, dass helle Stellen im Bild extrem kurze Belichtungszeiten mit hoher Beleuchtungsintensität erfahren. Dies führt jedoch zu deutlich stärkerer Photoschädigung.

Die Regeleinrichtung kann beispielsweise durch einen Echtzeitrechner gebildet sein. Diese Lösung gestattet eine hohe Variabilität. Wenn eine besonders schnelle Regelung erforderlich ist, beispielsweise wenn die Regelung innerhalb einer Pixelverweilzeit durchgeführt werde soll, kann es zweckmäßig sein, wenn die Regeleinrichtung durch einen analogen Regelschaltkreis gebildet ist. Hierbei sind auch Zwischenlösungen möglich, bei denen ein Teil der Regelung rechnerseitig erfolgt und weitere Funktionen durch spezifisch eingesetzte analoge Schaltkreise bereitgestellt werden.

Bei einer weiteren Variante, bei der die Anforderungen an die Schnelligkeit der Regelung nicht so hoch sind, wird die Information über die voraussichtliche Intensität des von einem Punkt zurückgestrahlten Lichts durch eine vorhergehende Messung, insbesondere in ein und demselben Scan-Vorgang, der Intensität des von einem benachbarten Punkt zurückgestrahlten Lichts bereitgestellt.

Noch geringere Anforderungen werden an die Schnelligkeit der Regelung gestellt, wenn die Regeleinrichtung die auf einen bestimmten Punkt eingestrahlte Intensität des Anregungslichts auf Grundlage einer für diesen Punkt in einem vorhergehenden Bild ermittelten Intensität des zurückgestrahlten Lichts einstellt. Dies ist insbesondere zweckmäßig, wenn ohnehin zeitliche Abläufe verfolgt werden und demgemäß eine Vielzahl von Bildern nacheinander aufgenommen wird. Hierbei erfolgt demgemäß die Regelung der Beleuchtung zwischen zwei Belichtungszeiten in einer Zeitreihe von Bildern. Die Information wird dabei aus vorherigen Bildaufnahmen verwendet und es wird ein Beleuchtungsprofil erstellt, welches die notwendige Information über die optischen Eigenschaften der Probe beinhaltet.

Besonders vorteilhaft ist das hier beschriebene erfindungsgemäße Verfahren im Zusammenspiel mit der vorstehend erwähnten T-REX-Beleuchtung einsetzbar. Besonders bevorzugt wird demgemäß die Probe gepulst beleuchtet und eine Pulsrate des Anregungslichts wird dabei abgestimmt auf eine Relaxationszeit aus Triplettzuständen der Farbstoffe, mit denen die Probe präpariert ist.

Die Erfindung kann insbesondere für Scanning-Mikroskope eingesetzt werden. Um bestimmte Bildraten zu erzielen, arbeiten diese Mikroskope mit vergleichsweise hohen Intensitäten, da pro Punkt nur wenig Zeit zur Verfügung steht. Demgemäß werden die erfindungsgemäßen Vorteile in besonderer Weise für Punkt-Scanning-Mikroskope aber auch für Linien-Scanning-Mikroskope erzielt.

Das erfindungsgemäße Verfahren kann aber ebenso vorteilhaft eingesetzt werden, wenn das Mikroskop ein Weitfeldmikroskop ist, da auch hier Bilder mit höherer Dynamiktiefe und gleichwohl geringerer Beleuchtungsleistung, also weniger Probenschädigung, möglich sind.

Besonders vorteilhafte Anwendungen hat die Erfindung für Fluoreszenzmikroskope. Solche Mikroskope werden insbesondere im Bereich der Biowissenschaften eingesetzt und die Problematik von Schädigungsprozessen ist hier besonders relevant. Insbesondere können durch die Erfindung höhere Beobachtungszeiten für "Life-Cell-Imaging", also die Beobachtung von lebenden Zellen, realisiert werden. Hierdurch ergeben sich völlig neue Experimentiermöglichkeiten. Insbesondere kann die Erfindung auch für Total-Internal-Reflexion-Fluoreszenz-Mikroskopie eingesetzt werden.

Als Intensitätsmodulator können grundsätzlich bekannte, hierfür eingesetzte Komponenten verwendet werden. Insbesondere kann der Intensitätsmodulator einen AOTF, einen AOM, eine Pockels-Zelle, eine Faraday-Zelle und/oder eine Kerr-Zelle aufweisen. Für Anwendungen, bei denen hohe Geschwindigkeiten erforderlich sind, werden bevorzugt AOTF oder AOM eingesetzt.

Bei Verwendung eines Linienscanners kann die Beleuchtung innerhalb der Linie mit einem Spatial-Light-Modulator geregelt werden. Das Beleuchtungsprofil kann dabei während des Scan-Vorgangs eines gesamten Bilds pro Zeile nachgeregelt werden.

Prinzipiell ist auch möglich, dass die Lichtquelle selbst in der Intensität einstellbar ist und/oder dass der Lichtmodulator integraler Bestandteil der Lichtquelle ist.

Auch in der Weitfeldmikroskopie kann mit Hilfe eines Spatial-Light-Modulators die Beleuchtung auf die Probe optimiert werden, was im einfachsten Fall durch eine Art Negativ-Bild erfolgen kann.

Wegen der vergleichsweise hohen Lichtverluste an Spatial-Light-Modulatoren sind Ausführungsbeispiele bevorzugt, bei denen der Spatial-Light-Modulator außerhalb eines Detektionsstrahlengangs angeordnet ist.

Das erfindungsgemäße Verfahren und das erfindungsgemäße Mikroskop können insbesondere vorteilhaft eingesetzt werden, wenn die Probe im Wesentlichen mit Licht einer Wellenlänge beleuchtet und sodann im Wesentlichen zurückgestrahltes Licht in einem Wellenlängenbereich, der auch sehr schmal sein kann, nachgewiesen wird. Ein weiteres großes Anwendungsgebiet wird der vorliegenden Erfindung jedoch eröffnet im Bereich der Mehrfarben-Fluoreszenz-Mikroskopie. Hierbei umfasst das Anregungslicht mehrere Wellenlängen zum Anregen einer Mehrzahl von verschiedenen Farbstoffen und die Intensität des von der Probe zurückgestrahlten Lichts wird in einer Mehrzahl von spektralen Bereichen gemessen. Die spektralen Bereiche können dabei eine variable Breite aufweisen. Die verschiedenen spektralen Bereiche können außerdem unmittelbar aneinander angrenzen, aneinander überlappen oder einen gewissen Abstand zueinander aufweisen, in welchem dann nicht gemessen wird.

Bei dieser Art der Mikroskopie können verschiedene Farben der Fluoreszenz im Mikroskop über die entsprechende Wahl optischer Bandpassfilter in der Emission getrennt werden. Das ist nur dann gut möglich, wenn die Emissionsspektren der verschiedenen Farbstoffe oder Fluorphore im gewählten Wellenlängenbereich kaum überlappen. Im Normalfall sind die Emissionsspektren der zur Wahl stehenden Farbstoffe jedoch nicht hinreichend verschieden, als das mit Filterkombinationen ein Übersprechen vollständig vermieden werden könnte oder dies ist nur mit extremem Lichtverlust zu erreichen. Bei der Verwendung mehrerer Farben kann hier ein Verfahren angewendet werden, welches als "spektrales Entmischen" bezeichnet wird und welches eine Näherungslösung eines häufig überbestimmten linearen Gleichungssystems verwendet, um die in den Kanälen gesammelten Photonen den verschiedenen Farbstoffen zuzuordnen.

Es wird demgemäß eine Zerlegung der für die verschiedenen spektralen Bereiche gemessenen Intensitäten in zu den jeweiligen Farbstoffen gehörende Anteile durchgeführt und diese Zerlegung wird durchgeführt auf Grundlage von bekannten Informationen über Emissionsspektren der verschiedenen Farbstoffe und unter Berücksichtigung von Position und Breite der spektralen Bereiche und es wird sodann für die verschiedenen Farbstoffe jeweils ein Gewichtungsfaktor bestimmt aus jeweils mindestens einem zu einem spektralen Bereich gehörenden Intensitätsanteil des jeweiligen Farbstoffs.

Dies wird für jeden Bildpunkt durchgeführt. Für jedes Pixel wird also ein Gleichungssystem folgender Form gelöst: A x x = y, wobei die Matrix A aus Referenzspektren der Farbstoffe in den jeweiligen Wellenlängenbereichen der Detektorkanäle konstruiert wird und x die entmischten Bilder sowie y die Bilder der einzelnen Detektorkanäle beschreibt. Es wurde vorgeschlagen, hierbei eine gewichtete lineare Regression durchzuführen, bei der jeder Kanal pro Pixel mit dem Inversen seines Rauschens gewichtet wird. Durch Fehlerfortpflanzung kann dann ebenfalls ein Fehler oder ein Signal/Rausch-Verhältnis für jedes entmischte Pixel angegeben werden, siehe: Neher und Neher, Journal of Microscopy, Volume 213, Part 1, January 2004, pp. 46-62.

Bei der Fluoreszenzmikroskopie mit mehreren Farben und spektraler Detektion hängt die optimale Kanallage der Detektionskanäle für anschließendes spektrales Entmischen nicht nur von den Spektren der Fluorphore ab, sondern auch von deren Konzentrationsverteilung bzw. vom Beitrag der einzelnen Fluorphore oder Farbstoffe zum Signal in den verschiedenen Detektionskanälen. Dies wiederum wird über die eingestrahlte Anregungsintensität der verschiedenen Wellenlängen beeinflusst. Stand der Technik ist die Optimierung von Anregung und Detektion für das gesamte Bild in Abhängigkeit der spektralen Eigenschaften der Farbstoffe. Dies ist beispielsweise beschrieben in DE 102 22 359 B4. Da aber bei vielen Anwendungen der Beitrag einzelner Farbstoffe zur Helligkeit in den unterschiedlichen Kanälen aufgrund der Konzentrationsverteilungen zwischen den einzelnen Bildpunkten stark schwankt, ist die Einstellung der Detektionskanäle für die meisten Bildpunkte nicht optimal. Dies führt zu einem größeren Signal-Rausch-Verhältnis der einzelnen Bildpunkte der spektral entmischten Bilder.

Die Anwendung des erfindungsgemäßen Verfahrens auf die Mehrfarben-Fluoreszenzmikroskopie besteht im Wesentlichen darin, dass ein pixelgenaues Mischen der Intensitäten der unterschiedlichen Anregungswellenlängen durchgeführt wird, um den Beitrag der einzelnen Farbstoffe zur detektierten Fluoreszenz zu optimieren und somit ein vorgegebenes Signal-zu Rausch-Verhältnis in den entmischten Bildern zu erhalten. Die Regelung erfolgt je nach System über ein schnelles Schalten der Intensitäten der verschiedenen Wellenlängen. Hierbei können im Grundsatz die bereits beschriebenen Intensitätsmodulatoren, beispielsweise elektrooptischer oder akustooptischer Art, insbesondere Pockels-Zellen oder AOMs oder AOTFs, oder gegebenenfalls mehrere Spatial-Light-Modulatoren eingesetzt werden. Eine Nachregelung kann wiederum bereits während einer Pixelverweilzeit oder zwischen zwei Bildern mit einem sogenannten "Prescan" erfolgen, ebenso wie bereits oben beschrieben. Die Nachregelung erfolgt sodann wie beim bereits beschriebenen Verfahren, wobei allerdings der Algorithmus zur Nachregelung komplizierter wird, da die Intensitätsregelung einer Wellenlänge nicht ausschließlich den Beitrag eines einzelnen Farbstoffs beeinflusst, sondern gegebenenfalls die Beiträge von mehreren Farbstoffen in jeweils unterschiedlichem Maß.

Mit der Anwendung des erfindungsgemäßen Verfahrens auf die Mehrfarben-Fluoreszenzmikroskopie kann eine erhebliche Verbesserung des Signal-Rausch-Verhältnisses sowie eine deutliche Empfindlichkeitssteigerung erreicht werden. Ein weiterer wesentlicher Vorteil ist, dass die Trennschärfe für die unterschiedlichen eingesetzten Farbstoffe deutlich verbessert werden kann. Auch hier sind die bereits oben beschriebenen Vorteile, insbesondere Erhöhung der Dynamiktiefe sowie Reduzierung der Photoschädigung sowie des Ausbleichens der Farbstoffe, bedeutsam.

Besonders bevorzugt wird demgemäß die Intensität und/oder die spektrale Zusammensetzung des in einen bestimmten Punkt der Probe eingestrahlten Anregungslichts mit der Regeleinrichtung abhängig von zuvor aus Messdaten der Probe bereitgestellten Informationen über voraussichtliche oder tatsächliche Intensitäten des von diesem Punkt in den verschiedenen spektralen Bereichen zurückgestrahlten Licht automatisch so eingestellt, dass Integrale der Intensitäten des von diesem Punkt in den verschiedenen spektralen Bereichen zurückgestrahlten Lichts über die Pixelverweilzeit in Werteintervallen liegen, die für die verschiedenen spektralen Bereiche jeweils individuell festzulegen sind.

Da die Gewichtungsfaktoren eine anschauliche und handhabare Größe sind, ist es im Hinblick auf die Auswertung besonders zweckmäßig, wenn die Werteintervalle für die verschiedenen spektralen Bereiche so festgelegt werden, dass die Gewichtungsfaktoren für jeden Farbstoff in einem Werteintervall liegen oder einen festzulegenden Wert aufweisen, wobei diese Werteintervalle oder die fraglichen Werte für die verschiedenen Farbstoffe jeweils individuell festzulegen sind. Die Werteintervalle bzw. Werte für die Gewichtungsfaktoren für die einzelnen Farbstoffe sind nicht zu verwechseln mit den Werteintervallen für die Intensitätsintegrale in den verschiedenen spektralen Bereichen. Diese Größen sind jedoch im Allgemeinen voneinander abhängig, so dass mit einer Festlegung der Gewichtungsfaktoren, also den Intensitätsbeiträgen der einzelnen Farbstoffe, prinzipiell auch die Werte für die Intensitätsintegrale in den einzelnen spektralen Bereichen festgelegt sind. Diese Größen können demgemäß im Hinblick auf die Regelung wechselseitig austauschbar sein.

In apparativer Hinsicht ist für diese Anwendungen zweckmäßig, dass die Lichtquelle zum Anregen einer Mehrzahl von unterschiedlichen Farbstoffen Anregungslicht bei einer Mehrzahl von Wellenlängen aussendet. Weiterhin sind für die Mehrfarben-Fluoreszenz-Mikroskopie eine Mehrzahl von Detektoren zum quantitativen und punktspezifischen Nachweis des von der Probe zurückgestrahlten Lichts in einer Mehrzahl von spektralen Bereichen vorhanden.

Weitere Vorteile und Merkmale der vorliegenden Erfindung werden nachstehend mit Bezug auf die beigefügten schematischen Figuren erläutert. Hierin zeigt:

Fig. 1    eine schematische Darstellung eines erfindungsgemäßen Mikroskops;

Fig. 2    eine schematische Darstellung eines Linienscanners;

Fig. 3    eine schematische Darstellung eines Weitfeldmikroskops;

Fig. 4    eine schematische Darstellung eines Regelkreises mit einem Echtzeitrechner;

Fig. 5    eine schematische Darstellung mit einer kombinierten Modulator- und Detektorelektronik;

Fig. 6    eine schematische Darstellung einer aus einem analogen Schaltkreis aufgebauten Regelungseinrichtung;

Fig. 7    ein Flussdiagramm mit Teilen der Abläufe des erfindungsgemäßen Verfahrens; und

Fig. 8    eine schematische Darstellung des Strahlengangs in einem TIR-Mikroskop.

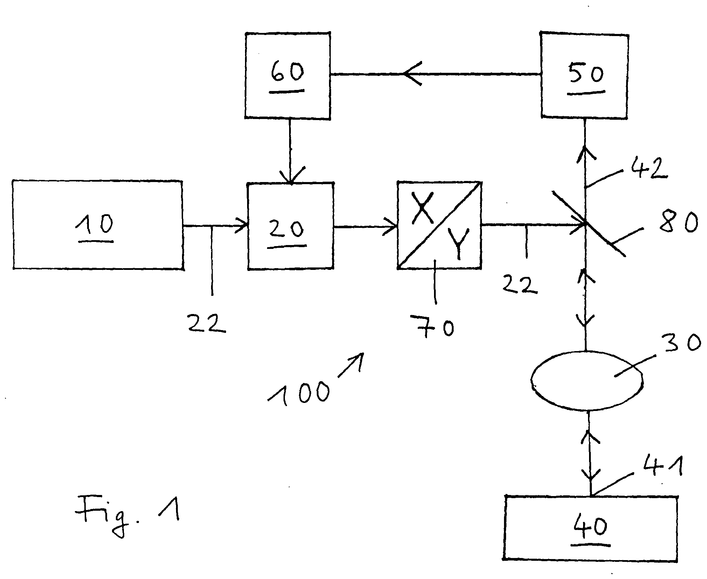

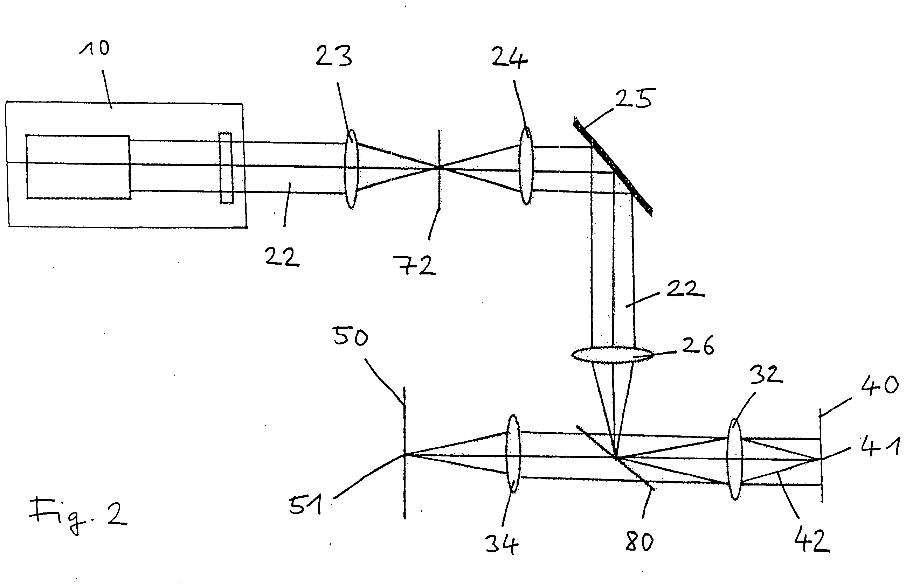

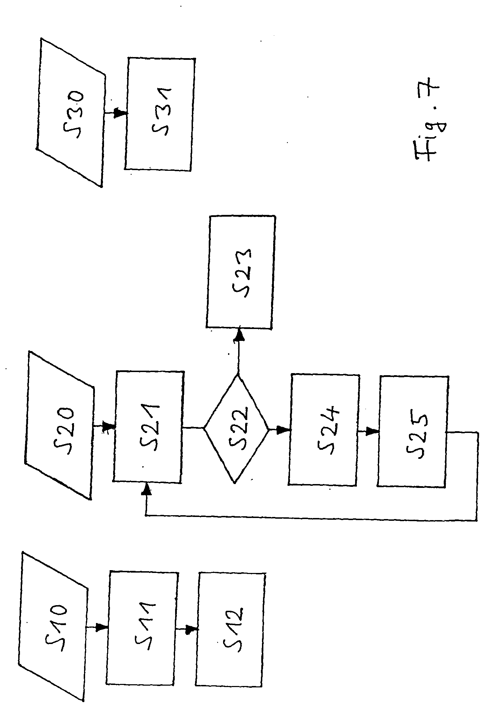

Der grundlegende Aufbau eines erfindungsgemäßen Mikroskops und die elementaren Abläufe des erfindungsgemäßen Verfahrens werden mit Bezug auf die Figuren 1 und 7 erläutert. Weitere Ausführungsbeispiele werden sodann mit Bezug auf die Figuren 2 bis 6 sowie 8 beschrieben. Äquivalente Komponenten sind in den Figuren jeweils mit denselben Bezugszeichen versehen.

Bei dem in Figur 1 schematisch gezeigten erfindungsgemäßen Mikroskop 100 handelt es sich um ein Punkt-Scanning-Mikroskop. Dieses weist als wesentliche Komponenten eine Lichtquelle 10, beispielsweise einen Laser, einen Identitätsmodulator 20, eine Scan-Einrichtung 70, eine Mikroskopoptik 30, einen Detektor 50 sowie eine Regeleinrichtung 60 auf. Die Lichtquelle 10 sendet Anregungslicht 22 zum mikroskopischen Untersuchen einer Probe 40 aus. Mit Hilfe des Intensitätsmodulators 20 wird eine Intensität des Anregungslichts 22 erfindungsgemäß gezielt eingestellt. Über die Scan-Einrichtung 70, einen Hauptstrahlteiler 80 und die schematisch dargestellte Mikroskopoptik 30 gelangt das Anregungslicht 22 auf einen Punkt 41 der Probe. Mit Hilfe der Scan-Einrichtung 70 kann der Anregungsstrahl des Anregungslichts 22 über die Probe 40 gerastert oder gescannt werden, wobei erfindungsgemäß die Intensität jeweils in einer im Folgenden näher zu beschreibenden Weise punktspezifisch eingestellt wird.

Durch das Anregungslicht 22 wird ein Fokalvolumen in einer Umgebung des Punkts 41 angeregt. Beispielsweise können dort vorhandene Farbstoffmoleküle in einen elektronisch angeregten Zustand angehoben werden. Infolgedessen strahlt das Fokalvolumen elektromagnetische Strahlung 42, beispielsweise Fluoreszenzlicht, ab. Dieses vom Punkt 41 abgestrahlte Licht 42 gelangt wiederum über die Mikroskopoptik 30, den Hauptstrahlteiler 80 und weitere, hier nicht im Detail gezeigte optische Komponenten auf einen Detektor 50, in welchem die Intensität des zurückgestrahlten Lichts 42 quantitativ gemessen wird. Die Messinformation des Detektors 50 wird der Regeleinrichtung 60 zugeführt. Aufgrund der Messinformation von der Probe 40 stellt die Regeleinrichtung 60 über den Intensitätsmodulator 20 die Intensität des Anregungslichts 22 erfindungsgemäß so ein, dass das Intensitätsintegral des zurückgestrahlten Lichts über die Pixelverweilzeit konstant ist.

Ein Punktscanner bietet als solcher die Möglichkeit, punktweise zu beleuchten. Um schnelle Schaltzeiten des Intensitätsmodulators 20, bei dem es sich typischerweise um einen AOTF handelt, zu erreichen, kann der Strahldurchmesser bei Durchtritt durch den Intensitätsmodulator 20 mit an sich bekannten Techniken verkleinert werden.

Für die Regelung wertet die Logik, welche den Detektor steuert, beispielsweise kann es sich hier um einen FPGA handeln, die Zählrate aus und bestimmt, ob zu viel oder zu wenig Licht auf die Probe trifft. Hierbei können bestimmte Grenzwerte definiert werden. Daraufhin kann die Logik eine Echtzeitsendung generieren zur entsprechenden Logik, welche die Beleuchtung steuert, beispielsweise eine Ansteuereinheit eines AOTF. Die Ansteuerung der Beleuchtung passt nun mit möglichst geringer Verzögerung die Beleuchtungsstärke entsprechend an. Parallel wird ein übergeordnetes System von der Manipulation der Beleuchtung unterrichtet, damit die im Folgenden aufgenommenen Detektorwerte neu verrechnet werden können. Dies wird im Zusammenhang mit Figur 7 weiter beschrieben.

Ganz allgemein werden nacheinander die Abläufe S10, S20 und S30 abgearbeitet. In Schritt S10 erfolgt ein "system setup", wobei zunächst modulmäßig betrachtet in Schritt S11 das Verhalten der Probe gegenüber einer optischen Anregung mit einem Laser ermittelt und ausgewertet wird. In Schritt S12 wird sodann ein Arbeitsbereich aufgesucht und im Einzelnen beschrieben. Die Schritte S20 bis S25 beinhalten Details der Regelung. Nach dem Start des Ablaufs für einen Bildpunkt in S20 erfolgt in Schritt S21 eine Online-Überprüfung der Anregung. In Schritt S22 erfolgt sodann eine Abfrage, ob eine Zählrate gemessen werden kann. Wenn dies der Fall ist, werden in Schritt 23 die in den Detektor einkommenden Photonen gezählt. Wenn keine Photonen nachgewiesen werden können, ändert die Regeleinrichtung in Schritt S24 die Einstellung des Intensitätsmodulators 20. Nach Speichern der Einstellungen des Intensitätsmodulators 20 in Schritt S25 wiederholt sich der Ablauf beginnend mit Schritt S21. Die Prozedur für einen Bildpunkt insgesamt wird in den Schritten S30 und S31 abgeschlossen, wobei in S31 eine Photonen-Zählrate errechnet wird unter Berücksichtigung der Einstellungen des Intensitätsmodulators 20.

Durch die modulierte Beleuchtung unterliegt die Probe punktspezifisch nichtlinearen Bleicheffekten. Dies kann, weil ja die Art der Beeinflussung bekannt ist, im Prinzip punktspezifisch herausgerechnet werden.

Figur 2 zeigt schematisch einen Linienscanner. Hierbei wird Anregungslicht 22 einer Lichtquelle 10 über eine nicht dargestellte Schlitzblende und eine Linse 23 zu einer Linie auf den Scanner 72 fokussiert. Mithilfe der Linse 24, welche auch als Scanobjektiv bezeichnet wird, wird das Anregungslicht 22 über einen Spatial-Light-Modulator 25 gescannt. Eine Tubuslinse 26 fokussiert den Strahl sodann auf den Hauptstrahlteiler 80, bei dem es sich um einen dichroitischen Strahlteiler handelt. Das Anregungslicht wird dort reflektiert und durch das Objektiv 32 als Linie auf die Probe 40 abgebildet. Von einem Punkt 41 der Probe 40 ausgehendes Fluoreszenzlicht 42 wird wiederum über das Objektiv 32 und sodann mit Hilfe einer Tubuslinse 34 auf einen Punkt 51 eines ortsauflösenden Detektors 50 abgebildet. Aufgrund einer Wellenlängenverschiebung des Fluoreszenzlichts kann dieses durch den Hauptstrahlteiler 80 hindurchtreten. Das Auslesen des ortsauflösenden Detektors 50 erfolgt mit virtueller Blende, beispielsweise wird also nur ein Detektorelement im Bereich des Punkts 51 ausgelesen, um Konfokalität bereitzustellen.

Die Probe 40 ist in der rechtsseitigen Brennebene des Objektivs 32 und ein Mittelpunkt des Hauptstrahlteilers 80 ist in einer linksseitigen Brennebene des Objektivs 32 positioniert.

Bei dem in Fig. 2 gezeigten Ausführungsbeispiel sind Anregungs- und Detektionsstrahlengang getrennt. Die ungünstigen optischen Eigenschaften, wie beispielsweise hoher Lichtverlust am Spatial-Light-Modulator wirken sich deshalb auf der Detektionsseite nicht nachteilig aus. Das Scanning des zweidimensionalen Spatial-Light-Modulators erlaubt nur vergleichsweise geringe Schaltgeschwindigkeiten, so dass das Nachregeln im Allgemeinen hier nur von Bild zu Bild, zumeist aber nicht innerhalb einer Linie erfolgen kann. Eine möglichst geringe Anzahl an optischen Komponenten im Detektionsstrahlengang sorgt für größtmögliche Sensitivität und damit eine reduzierte Photoschädigung der Probe. Linienscanner sind bei gleicher Bildrate gegenüber den Punktscannern im Vorteil, da die Pixelverweilzeit hier länger und somit die Intensität der Anregungsstrahlung kleiner sein kann. Auch hierdurch werden Photoschädigungsprozesse reduziert. Der Einsatz des Spatial-Light-Modulators erlaubt darüber hinaus die Kombination dieses Verfahrens mit anderen Techniken zur strukturierten Beleuchtung, beispielsweise zur Auflösungssteigerung. Die Nachregelung des Spatial-Light-Modulators 25 erfolgt jeweils pro Bild in einer Rückkopplungsschleife mit der Kamera, beispielsweise mit einem Echtzeitrechner.

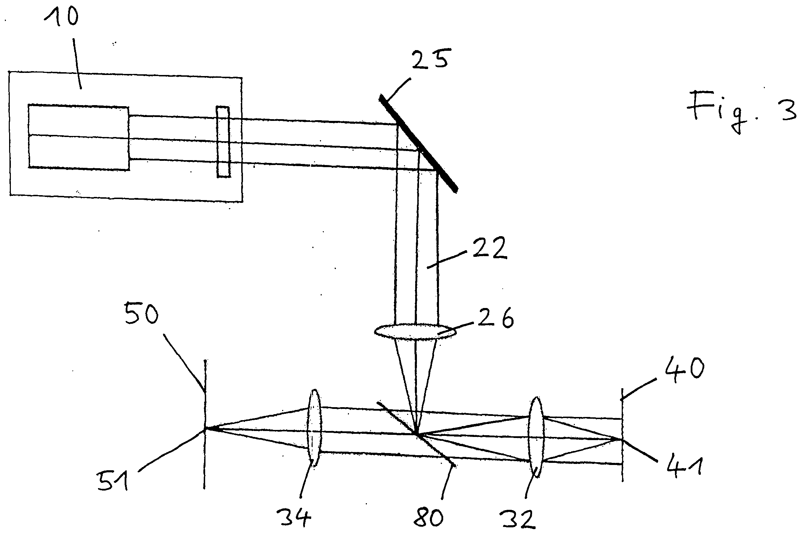

Bei der in Fig. 3 gezeigten Weitfeldanordnung wird ein zweidimensional ortsauflösender Detektor 50 verwendet. Im Übrigen entsprechen die Gegebenheiten im Detektionsstrahlengang weitestgehend dem im Zusammenhang mit Fig. 2 beschriebenen Linienscanner. Im Anregungsstrahlengang, in dem ebenfalls ein Spatial-Light-Modulator 25 verwendet wird, gestaltet sich der Aufbau erheblich einfacher, da ein gesamter Probenbereich ausgeleuchtet wird. Bei gleicher Bildrate ermöglicht die Weitfeldanordnung die minimale Anregungs-Intensität pro Bildpunkt, da die Belichtungszeit hier entsprechend länger sein kann. Wie in dem in Fig. 2 gezeigten Ausführungsbeispiel befindet sich auch in Fig. 3 der Spatial-Light-Modulator nicht im Detektionsstrahlengang, so dass die insoweit ungünstigen Eigenschaften des Spatial-Light-Modulators keine Rolle spielen. Der Einsatz des Spatial-Light-Modulators im Weitfeld erlaubt eine Nachregelung zwischen den Bildern sowie eine Kombination mit anderen Verfahren zur strukturierten Beleuchtung, um hochaufgelöste Mikroskopie mit dynamischer Bildgebung zu betreiben.

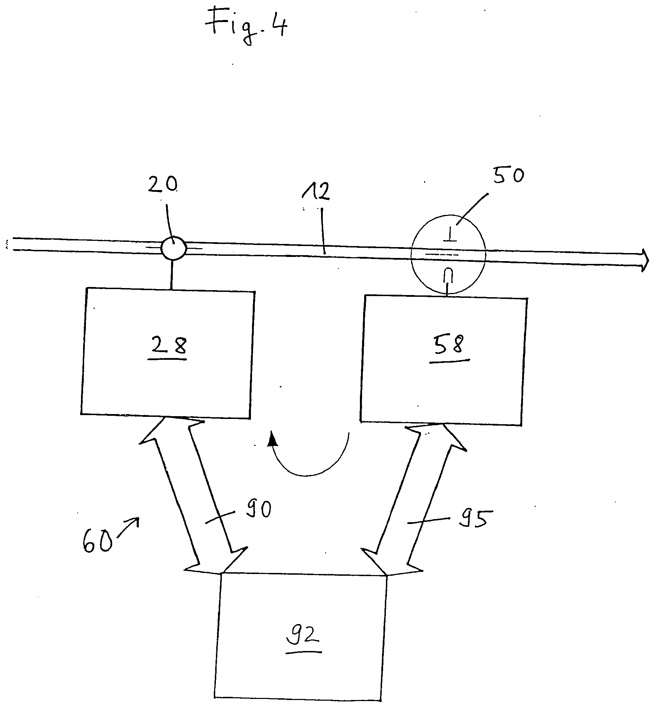

Verschiedene Varianten von Regeleinrichtungen werden mit Bezug auf die Figuren 4 bis 6 erläutert. Ein Punkt-Scanning-System bietet mehrere Möglichkeiten, einen Regelkreis vorteilhaft zu realisieren. In Fig. 4 ist beispielsweise ein Aufbau auf Grundlage eines bestehenden modularen Laser-Scanning-Mikroskops dargestellt, bei dem eine vorhandene Datenverarbeitungsstrecke genutzt wird, um die notwendigen Regelparameter zu gewinnen und zum Stellglied zu übertragen. Wesentliche Komponenten der Regelung sind in Fig. 4 ein im Strahlengang 12 angeordneter Intensitätsmodulator 20 mit einer Modulatorelektronik 28 sowie ein Detektor 50 mit einer Detektorelektronik 58. Diese Komponenten stehen, angedeutet durch Doppelpfeile 90, 95 mit einem Controller 92, bei dem es sich insbesondere um einen Echtzeitrechner handelt, in Wirkverbindung. Die Ansteuerung der Modulatorelektronik 28 erfolgt auf Grundlage der vom Detektor 50 ermittelten und über die Datenverarbeitungstrecke 95 an den Controller 92 übermittelten Daten.

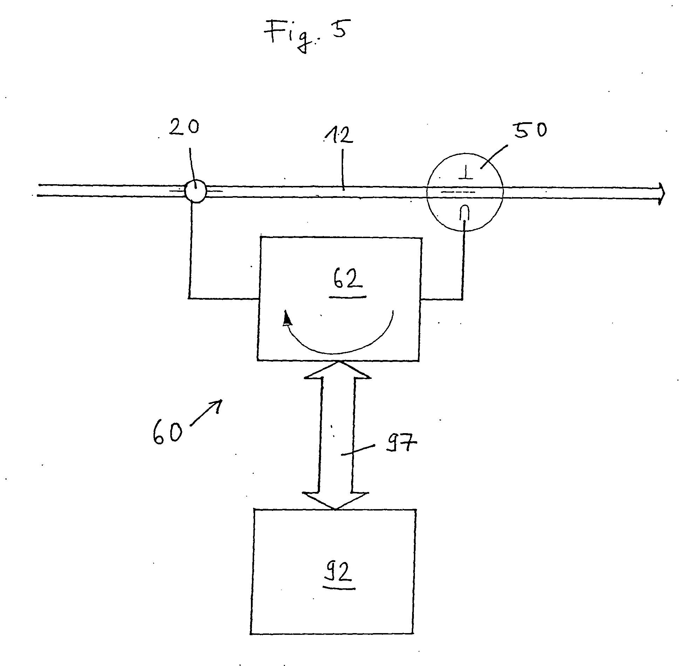

Weiterhin kann ein bestehendes nicht-modulares Laser-Scanning-Mikroskop entsprechend angepasst werden. Dabei müssen die Regelparameter nicht über eine Datenübertragungsstrecke weitergegeben werden, wodurch schnellere Reaktionszeiten möglich sind. Ein solcher Aufbau ist in Fig. 5 dargestellt. Hierbei befindet sich eine kombinierte Modulator- und Detektorelektronik 62, angedeutet durch einen Doppelpfeil 97, in Wirkverbindung mit dem Controller 92.

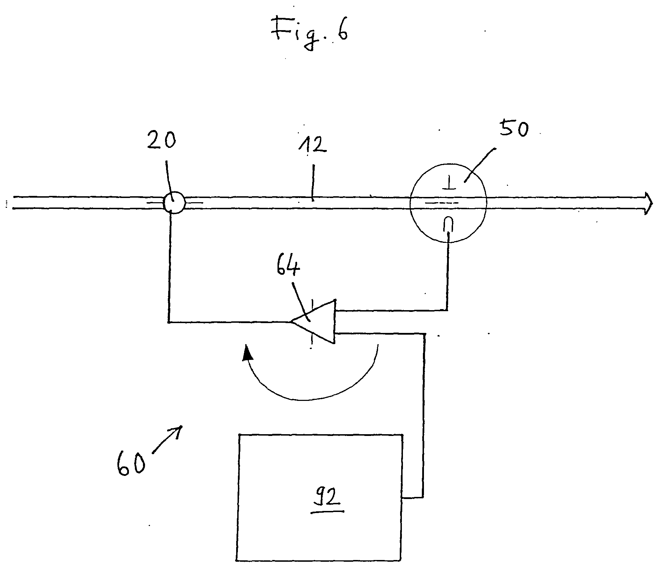

Schließlich kann, wie schematisch in Fig. 6 gezeigt, eine spezielle Analogelektronik 64 entwickelt werden, welche die Regelung übernimmt. Die Regelparameter werden dann von außen, beispielsweise über den Controller 92 eingestellt. Die Reaktionszeit der Regelung hängt dann nur von den verwendeten Stellelementen und Detektoren ab.

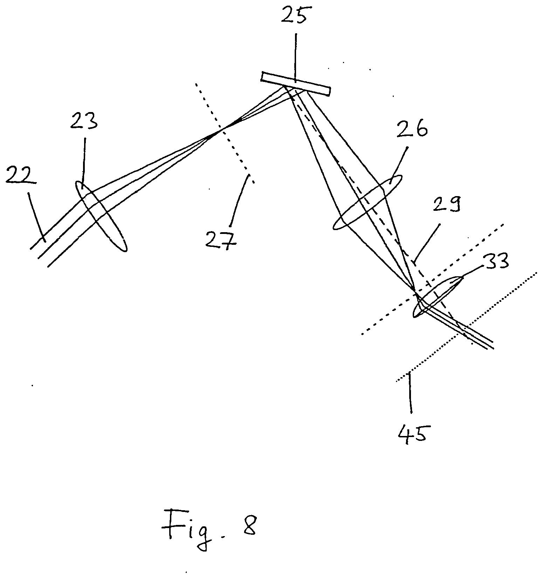

Der Strahlengang in einem Total-Internal-Reflection-Mikroskop ist in Fig. 8 schematisch dargestellt. Für diese Art der Mikroskopie ist das hier beschriebene erfindungsgemäße Verfahren ebenfalls vorteilhaft einsetzbar, beispielsweise um längere Beobachtungszeiten bei der Untersuchung von lebenden Zellen zu ermöglichen. Figur 8 zeigt die wesentlichen Bestandteile des Anregungsstrahlengangs in einem solchen Mikroskop, bei dem erfindungsgemäß die Intensität des Anregungslichts räumlich moduliert wird.

Das Anregungslicht 22 wird als ein in grundsätzlich bekannter Weise aufgeweiteter Laserstrahl oder Strahl einer anderen Lichtquelle über eine Linse 23, die wie der Strahl des Anregungslichts 22 etwas vertikal zu einer optischen Achse 29 eines Objektivs 33 verschoben ist, in die konjugierte bildseitige Brennebene 27 fokussiert, so dass nach Reflexion an einem Spatial-Light-Modulator 25 und einer Abbildung über eine Linse 26 das Anregungslicht 22 auf einen möglichst weit von der optische Achse 29 entfernten Punkt in der Brennebene 31 fokussiert wird. Dies ermöglicht einen kleinen Austrittswinkel des Anregungslichts 22 aus dem Objektiv 33 und damit über die Totalreflexion hinaus eine geringe Eindringtiefe der evaneszenten Wellen. Eine Probe ist dann im Bereich der objektseitigen Brennebene 45 des Objektivs 33 positioniert. Der Spatial-Light-Modulator 25 steht im Zwischenbild, das durch das Objektiv 33 und die Linse 26 gebildet wird, so dass die erfindungsgemäße räumliche Modulierung des Anregungslichts 22 durch den Spatial-Light-Modulator 25 in oder auf die Probe 40 abgebildet wird. Im Grundsatz werden mit diesem Aufbau dieselben Vorteile wie mit dem oben in Zusammenhang mit Figur 3 beschriebenen Weitfeldaufbau erzielt.

Die vorliegende Erfindung bezieht sich auf ein neuartiges Mikroskop und eine neuartige Methode, bei der für die Bildgebung eines Objekts die Intensität der Beleuchtung räumlich differenziert spezifisch den optischen Eigenschaften des Objekts oder der Probe angepasst wird. Daraus ergeben sich besonders in der Mikroskopie Vorteile im Hinblick auf die Erweiterung des Dynamikbereichs sowie die Reduzierung von Photoschädigung der zu untersuchenden Zellen sowie außerdem eine Reduzierung des Ausbleichens der verwendeten Farbstoffe. Der erfindungsgemäße Aufbau erfordert mindestens eine Lichtquelle, einen Intensitätsmodulator, bei dem es sich um einen Amplituden- und/oder einen Polarisationsmodulator handeln kann, einen Detektor sowie eine Feed-back-Regulierung vom Detektor zum Intensitätsmodulator. Sodann muss ein Richtwert, beispielsweise eine obere Schranke, festgelegt werden, welche Intensität erreicht werden soll. Darüber hinaus empfiehlt es sich, ein Hintergrundkriterium festzulegen, so dass die erfindungsgemäße Regelung nur für tatsächlich von der zu untersuchenden Probe kommende Strahlung durchgeführt wird. Hierin liegt ein weiterer Unterschied zu dem eingangs beschriebenen CLEM-Verfahren, welches ausdrücklich zwei Schwellwerte benutzt. Die zu erreichende Intensität beim erfindungsgemäßen Verfahren ist eine obere Schranke, welche die Beleuchtungsregelung zu erreichen sucht, jedoch nicht überschreiten muss. Das Hintergrundkriterium, die Entscheidung also, ob ein Bildpunkt Hintergrund oder Signal ist, kann darüber hinaus auch extern zugeführt werden und muss nicht über das gemessene Licht, beispielsweise aus einer vorherigen Messung, bestimmt werden.

**Patentansprüche**

1. Verfahren zum Betreiben eines Mikroskops, insbesondere nach einem der Ansprüche 16 bis 29, bei dem Anregungslicht (22) auf oder in verschiedene Punkte (41) einer Probe (40) fokussiert oder gestrahlt wird,

bei dem eine Intensität des Anregungslichts (22) punktspezifisch variiert wird und bei dem eine Intensität von von der Probe (40) zurückgestrahltem Licht (42) in mindestens einem spektralen Bereich punktspezifisch und quantitativ gemessen wird, **dadurch gekennzeichnet,**

**dass** die Intensität und/oder eine spektrale Zusammensetzung des in einen bestimmten Punkt (41) der Probe eingestrahlten Anregungslichts (22) mit einer Regeleinrichtung (60) abhängig von einer zuvor aus Messdaten der Probe (40) bereitgestellten Information über eine voraussichtliche oder tatsächliche Intensität des von diesem Punkt (41) in dem spektralen Bereich zurückgestrahlten Lichts (42) automatisch so eingestellt wird, dass ein Integral der Intensität des von diesem Punkt (41) in dem spektralen Bereich zurückgestrahlten Lichts (42) über eine Pixelverweilzeit innerhalb eines festzulegenden Werteintervalls liegt, und dass die Information über die voraussichtliche Intensität des von einem Punkt (41) zurückgestrahlten Lichts (42) durch eine anfängliche Messung zu Beginn einer Pixelverweilzeit der Intensität des von diesem Punkt (41) zurückgestrahlten Lichts (42) bereitgestellt wird und

**dass** die Regeleinrichtung (60) die Intensität des Anregungslichts während der Pixelverweilzeit einstellt.

2. Verfahren nach Anspruch 1, **dadurch gekennzeichnet,**
**dass** die Regeleinrichtung (60) die Intensität des Anregungslichts (22) für einen bestimmten Punkt (41) nur dann so einstellt, dass das Integral der Intensität des von diesem Punkt (41) zurückgestrahlten Lichts (42) über eine Pixelverweilzeit innerhalb eines vorbestimmten Werteintervalls liegt, wenn für diesen Punkt (41) ein Signalkriterium erfüllt ist.

3. Verfahren nach einem der Ansprüche 1 oder 2, **dadurch gekennzeichnet,**
**dass** das Anregungslicht (22) mehrere Wellenlängen zum Anregen einer Mehrzahl von verschiedenen Farbstoffen umfasst und
**dass** die Intensität des von der Probe (40) zurückgestrahlten Lichts (42) in einer Mehrzahl von verschiedenen spektralen Bereichen gemessen wird.

4. Verfahren nach einem der Ansprüche 1 bis 3, **dadurch gekennzeichnet,**
**dass** das Werteintervall für das Integral der Intensität des von einem Punkt (41) zurückgestrahlten Lichts (42) über die Pixelverweilzeit so festgelegt wird, dass ein verwendeter Detektor (50) bei möglichst guter Empfindlichkeit und bei möglichst gutem Signal-Rausch-Verhältnis betrieben wird.

5. Verfahren nach einem der Ansprüche 1 bis 4, **dadurch gekennzeichnet,**
**dass** die Regelung so durchgeführt wird, dass die Intensität des Anregungslichts (22) für einen bestimmten Punkt (41) über eine Pixelverweilzeit nach einer Einschwingphase der Regelung weitestgehend konstant bleibt.

6. Verfahren nach einem der Ansprüche 1 bis 5, **dadurch gekennzeichnet,**
**dass** die Regelung so durchgeführt wird, dass das Integral der Intensität des von einem Punkt (41) zurückgestrahlten Lichts (42) über eine Pixelverweilzeit, insbesondere für alle Punkte, welche ein Signalkriterium erfüllen, konstant ist.

7. Verfahren nach einem der Ansprüche 1 bis 6, **dadurch gekennzeichnet,**
**dass** für alle Punkte dieselbe Pixelverweilzeit verwendet wird.

8. Verfahren nach einem der Ansprüche 1 bis 7, **dadurch gekennzeichnet,**
**dass** für alle Punkte, für welche ein Signalkriterium erfüllt ist, dieselbe Pixelverweilzeit verwendet wird.

9. Verfahren nach einem der Ansprüche 2 bis 8, **dadurch gekennzeichnet,**
**dass** das Signalkriterium für einen bestimmten Punkt (41) erfüllt ist, wenn die voraussichtliche oder tatsächliche Intensität des von diesem Punkt (41) zurückgestrahlten Lichts (42) oberhalb einer festzulegenden Hintergrundschwelle liegt.

10. Verfahren nach einem der Ansprüche 2 bis 9, **dadurch gekennzeichnet,**
**dass** das Signalkriterium für einen bestimmten Punkt (41) erfüllt ist, wenn ein extern zugeführtes punktspezifisches Signal einen festzulegenden Wert aufweist.

11. Verfahren nach einem der Ansprüche 1 bis 10, **dadurch gekennzeichnet,**
**dass** zum groben Ermitteln der Intensität des von einzelnen Punkten (41) zurückgestrahlten Lichts (42) ein Testbild oder ein Testscan aufgenommen wird.

12. Verfahren nach einem der Ansprüche 1 bis 11, **dadurch gekennzeichnet,**
**dass** die Probe (40) gepulst beleuchtet wird und
**dass** eine Pulsrate des Anregungslichts (22) abgestimmt wird auf eine Relaxationszeit aus Triplettzuständen der Farbstoffe, mit denen die Probe (40) präpariert ist.

13. Verfahren nach einem der Ansprüche 3 bis 12, **dadurch gekennzeichnet,**

dass die Intensität und/oder die spektrale Zusammensetzung des in einen bestimmten Punkt der Probe (40) eingestrahlten Anregungslichts (22) mit der Regeleinrichtung (60) abhängig von zuvor aus Messdaten der Probe (40) bereitgestellten Informationen über voraussichtliche oder tatsächliche Intensitäten des von diesem Punkt (41) in den verschiedenen spektralen Bereichen zurückgestrahlten Lichts (42) automatisch so eingestellt wird, dass Integrale der Intensitäten des von diesem Punkt in den verschiedenen spektralen Bereichen zurückgestrahlten Lichts über die Pixelverweilzeit in Werteintervallen liegen, die für die verschiedenen spektralen Bereiche jeweils individuell festzulegen sind.

14. Verfahren nach einem der Ansprüche 3 bis 13,
**dadurch gekennzeichnet,**
dass eine Zerlegung der für die verschiedenen spektralen Bereiche gemessenen Intensitäten in zu den jeweiligen Farbstoffen gehörende Anteile durchgeführt wird,
dass diese Zerlegung durchgeführt wird auf Grundlage von bekannten Informationen über Emissionsspektren der verschiedenen Farbstoffe und unter Berücksichtigung von Position und Breite der spektralen Bereiche und
dass für die verschiedenen Farbstoffe jeweils ein Gewichtungsfaktor bestimmt wird aus jeweils mindestens einem zu einem spektralen Bereich gehörenden Intensitätsanteil des jeweiligen Farbstoffs.

15. Verfahren nach einem der Ansprüche 3 bis 14,
**dadurch gekennzeichnet,**
dass die Werteintervalle für die verschiedenen spektralen Bereiche so festgelegt werden, dass die Gewichtungsfaktoren für jeden Farbstoff in einem Werteintervall liegen oder einen festzulegenden Wert aufweisen, wobei das Werteintervall oder der Wert für die verschiedenen Farbstoffe jeweils individuell festzulegen ist.

16. Mikroskop, insbesondere zur Durchführung des Verfahrens nach einem der Ansprüche 1 bis 15,
mit einer Lichtquelle (10) zum Aussenden von Anregungslicht (22) zum mikroskopischen Untersuchen einer Probe (40),
mit einem Intensitätsmodulator (20) zum Variieren einer Intensität des Anregungslichts (22),
mit einer Mikroskopoptik (30) zum Leiten des Anregungslichts (22) auf verschiedene Punkte der zu untersuchenden Probe (40) und zum Leiten von von den verschiedenen Punkten (41) der Probe (40) zurückgestrahltem Licht (42) auf einen Detektor (50),
mit dem Detektor (50) zum punktspezifischen und quantitativen Nachweis der Intensität des von der Probe (40) zurückgestrahlten Lichts (42) in mindestens einem spektralen Bereich und
mit einer Regelungseinrichtung (60), die mit dem Intensitätsmodulator (20) und dem Detektor (50) zusammenwirkt,
**dadurch gekennzeichnet,**
dass die Regelungseinrichtung (60) dazu eingerichtet ist, die Intensität und/oder eine spektrale Zusammensetzung des auf einen Punkt (41) der Probe (40) eingestrahlten Anregungslichts (22) abhängig von einer zuvor aus Messdaten der Probe (40) bereitgestellten Information über eine voraussichtliche oder tatsächliche Intensität des von diesem Punkt (41) in dem spektralen Bereich zurückgestrahlten Lichts (42) automatisch so einzustellen, dass ein Integral der vom Detektor (50) für diesen Punkt (41) nachgewiesenen Intensität des in dem spektralen Bereich zurückgestrahlten Lichts (42) über eine Pixelverweilzeit innerhalb eines festzulegenden Werteintervalls liegt,
wobei die Information über die voraussichtliche Intensität des von einem Punkt (41) zurückgestrahlten Lichts (42) durch eine anfängliche Messung zu Beginn einer Pixelverweilzeit der Intensität des von diesem Punkt (41) zurückgestrahlten Lichts (42) bereitstellbar ist und
dass die Regelungseinrichtung (60) dazu eingerichtet ist, die Intensität des Anregungslichts während der Pixelverweilzeit einzustellen.

17. Mikroskop nach Anspruch 16,
**dadurch gekennzeichnet,**
dass die Regelungseinrichtung (60) dazu eingerichtet ist, die Intensität des Anregungslichts (22) für einen bestimmten Punkt (41) nur dann so einzustellen, dass das Integral der Intensität des von diesem Punkt (41) zurückgestrahlten Lichts (42) über eine Pixelverweilzeit innerhalb eines vorbestimmten Werteintervalls liegt, wenn für diesen Punkt (41) ein Signalkriterium erfüllt ist.

18. Mikroskop nach Anspruch 16 oder 17,
**dadurch gekennzeichnet,**
dass die Lichtquelle (10) dazu eingerichtet ist, zum Anregen einer Mehrzahl von unterschiedlichen Farbstoffen Anregungslicht (22) bei einer Mehrzahl von Wellenlängen auszusenden und
dass eine Mehrzahl von Detektoren zum quantitativen und punktspezifischen Nachweis des von der Probe zurückgestrahlten Lichts (42) in einer Mehrzahl von spektralen Bereichen vorhanden ist.

19. Mikroskop nach einem der Ansprüche 16 bis 18,
**dadurch gekennzeichnet,**
dass das Mikroskop ein Scanning-Mikroskop, insbesondere ein Punkt-Scanning-Mikroskop, ist.

20. Mikroskop nach einem der Ansprüche 16 bis 19,
**dadurch gekennzeichnet,**
dass das Mikroskop ein Linien-Scanning-Mikroskop ist.

**21.** Mikroskop nach einem der Ansprüche 16 bis 19,
**dadurch gekennzeichnet,**
**dass** das Mikroskop ein Weitfeldmikroskop ist.

**22.** Mikroskop nach einem der Ansprüche 16 bis 20,
**dadurch gekennzeichnet,**
**dass** das Mikroskop ein Fluoreszenz-Mikroskop, insbesondere Total-Internal-Reflexion-Fluoreszenz-Mikroskop ist.

**23.** Mikroskop nach einem der Ansprüche 16 bis 22,
**dadurch gekennzeichnet,**
**dass** der Intensitätsmodulator (20) einen AOTF, einen AOM, eine Pockels-Zelle, eine Faraday-Zelle und/oder eine Kerr-Zelle aufweist.

**24.** Mikroskop nach einem der Ansprüche 16 bis 23,
**dadurch gekennzeichnet,**
**dass** der Intensitätsmodulator einen Spatial-Light-Modulator (25) aufweist.

**25.** Mikroskop nach Anspruch 24,
**dadurch gekennzeichnet,**
**dass** der Spatial-Light-Modulator (25) außerhalb eines Detektionsstrahlengangs angeordnet ist.

**26.** Mikroskop nach einem der Ansprüche 16 bis 25,
**dadurch gekennzeichnet,**
**dass** die Regeleinrichtung (60) durch einen Echtzeitrechner gebildet ist.

**27.** Mikroskop nach einem der Ansprüche 16 bis 26
**dadurch gekennzeichnet,**
**dass** die Regeleinrichtung (60) durch einen analogen Regelschaltkreis (62, 64) gebildet ist.

**28.** Mikroskop nach einem der Ansprüche 16 bis 27,
**dadurch gekennzeichnet,**
**dass** die Lichtquelle (10) dazu eingerichtet ist, zum Anregen einer Mehrzahl von unterschiedlichen Farbstoffen Anregungslicht (22) bei einer Mehrzahl von Wellenlängen auszusenden.

**29.** Mikroskop nach einem der Ansprüche 16 bis 28,
**dadurch gekennzeichnet,**
**dass** eine Mehrzahl von Detektoren zum quantitativen und punktspezifischen Nachweis des von der Probe zurückgestrahlten Lichts (42) in einer Mehrzahl von spektralen Bereichen vorhanden ist.

**Claims**

**1.** Method for operating a microscope, more particularly as defined in any one of claims 16 to 29,
in which excitation light (22) is focused on, or beamed to, different points (41) of a specimen (40),
in which an intensity of the excitation light (22) is point-specifically varied and in which an intensity of the light (42) reflected by said specimen (40) in at least one spectral range is measured point-specifically and quantitatively **characterized in that**
the intensity and/or a spectral composition of the excitation light (22) beamed to a specific point (41) of said specimen is automatically adjusted by a regulating device (60) on the basis of an information previously gained from measured data of said specimen (40) concerning an estimated or actual intensity of the light (42) reflected in the spectral range by said point (41) such that an integral of the intensity of the light (42) reflected in the spectral range by this point (41) during a pixel dwell time is within a predefined value interval
**in that** the information about the estimated intensity of the light (42) reflected by one point (41) is gained from a previously measurement at the beginning of a pixel dwell time of the intensity of the light (42) reflected by this point (41) and
**in that** the regulating device (60) adjusts the intensity of the excitation light during the pixel dwell time.

**2.** Method as defined in claim 1,
**characterized in that**
the regulating device (60) only then adjusts the intensity of the excitation light (22) for a specific point (41) such that the integral of the intensity of the light (42) reflected by this point (41) during a pixel dwell time is within a predefined value interval when a signal criterion for this point (41) is satisfied.

**3.** Method as defined in any one of claims 1 or 2,
**characterized in that**
that the excitation light (22) includes a plurality of wavelengths for exciting a plurality of different dyes and
that the intensity of the light (42) reflected by said specimen (40) is measured in a plurality of different spectral regions.

**4.** Method as defined in any one of claim 1 to 3,
**characterized in that**
the value interval for the integral of the intensity of the light (42) reflected by a point (41) during the pixel dwell time is set such that a detector (50) used is able to operate with maximum sensitivity and with a maximum signal to noise ratio.

**5.** Method as defined in any one of claims 1 to 4,
**characterized in that**
the regulation is effected such that the intensity of the excitation light (22) for a specific point (41) is during a pixel dwell time constant to a maximum extent following a stabilization phase of the regulating process.

**6.** Method as defined in any one of claims 1 to 5,

**characterized in that**
the regulation is effected such that the integral of the intensity of the light (42) reflected during a pixel dwell time by a point (41), more particularly by all points, satisfying a signal criterion, is constant.

7. Method as defined in any one of claims 1 to 6, **characterized in that**
the same pixel dwell time is used for all points.

8. Method as defined in any one of claims 1 to 7, **characterized in that**
the same pixel dwell time is used for all points for which a signal criterion is satisfied.

9. Method as defined in any one of claims 2 to 8, **characterized in that**
said signal criterion for a specific point (41) is satisfied if the estimated or actual intensity of the light (42) reflected by said point (41) is above a specifiable background threshold.

10. Method as defined in any one of claims 2 to 9, **characterized in that**
said signal criterion for a specific point (41) is satisfied when an externally supplied point-specific signal has a predefined value.

11. Method as defined in any one of claims 1 to 10, **characterized in that**
for the purpose of roughly ascertaining the intensity of the light (42) reflected by individual points (41), a test pattern or test scan is recorded.

12. Method as defined in any one of claims 1 to 11, **characterized in that**
said specimen (40) is pulse-illuminated and that a pulse rate of the excitation light (22) is adapted to a relaxation time existing of triplet states of the dyes with which said specimen (40) has been prepared.

13. Method as defined in any one of claims 3 to 12, **characterized in that**
the intensity and/or the spectral composition of the excitation light (22) beamed to a specific point of said specimen (40) is automatically adjusted by the regulating device (60) on the basis of information concerning estimated or actual intensities of the light (42) reflected by this point (41) in the different spectral ranges, as previously gained from measured data of said specimen (40), such that integrals of the intensities of the light reflected by this point in the different spectral ranges during the pixel dwell time are within value intervals in each case individually specifiable for the different spectral ranges.

14. Method as defined in any one of claims 3 to 13,

**characterized in that**
a separation is carried out for the intensities measured for the different spectral regions into portions pertaining to the respective dyes,
that said separation is carried out on the basis of known information concerning the emission spectra of the different dyes while taking into consideration the position and width of the spectral ranges and that for each of the different dyes a weighting factor is determined from in each case at least one intensity portion of the respective dye pertaining to a spectral range.

15. Method as defined in any one of claims 3 to 14, **characterized in that**
the value intervals for the different spectral ranges are fixed such that the weighting factors for each dye lie in a value interval or have a predefined value, which value interval or value is individually specifiable for each of the different dyes.

16. Microscope, more particularly for execution of the method as defined in any one of claims 1 to 15, comprising
a light source (10) for emission of excitation light (22) for microscopic investigation of a specimen (40), an intensity modulator (20) for varying an intensity of said excitation light (22), a microscope optics (30) for guiding said excitation light (22) to different points of the specimen (40) to be tested and for guiding the light (42) reflected by said different points (41) of said specimen (40) to a detector (50) said detector (50) for point-specific and quantitative detection of the intensity of the light (42) reflected by said specimen (40) in at least one spectral range, and
a regulating device (60) which cooperates with said intensity modulator (20) and said detector (50),
**characterized in that**
the regulating device (60) is provided to automatically adjust the intensity and/or a spectral composition of the excitation light (22) beamed to a point (41) of said specimen (40) on the basis of an information, previously gained from measured data of said specimen (40), concerning an estimated or actual intensity of the light (42) reflected in the spectral range by this point (41) such that an integral of the intensity of the light (42) reflected in the spectral range, as detected by said detector (50) for this point (41), during a pixel dwell time is within a predefined value interval,
wherein the information about the estimated intensity of the light (42) reflected by one point (41) can be gained from a previously measurement at the beginning of a pixel dwell time of the intensity of the light (42) reflected by this point (41) and **in that** the regulating device (60) is thus equipped to adjust the intensity of the excitation light during the pixel dwell time.

**17.** A microscope as defined in claim 16,
**characterized in that**
said regulating device (60) is thus equipped to only then adjust the intensity of the excitation light (22) for a specific point (41) such that the integral of the intensity of the light (42) reflected by this point (41) during a pixel dwell time is within a predefined value interval when a signal criterion for this point (41) is satisfied.

**18.** Microscope as defined in claim 16 or 17
**characterized in that**
said light source (10) is thus equipped to emit excitation light (22) having a plurality of wavelengths for excitation of a plurality of different dyes and that a plurality of detectors is present for quantitative and point-specific determination of the light (42) reflected by said specimen in a plurality of spectral ranges.

**19.** Microscope, as defined in any one of claims 16 to 18,
**characterized in that**
said microscope is a scanning microscope and more particularly a point-scanning microscope.

**20.** Microscope as defined in any one of claims 16 to 19,
**characterized in that**
said microscope is a line-scanning microscope.

**21.** The microscope as defined in any one of claims 16 to 19,
**characterized in that**
said microscope is a wide field microscope.

**22.** The microscope as defined in any one of claims 16 to 20,
**characterized in that**
said microscope is a fluorescence microscope, in particular a total internal reflection fluorescence microscope.

**23.** The microscope as defined in any one of claims 16 to 22,
**characterized in that**
said intensity modulator (20) has an AOTF, an AOM, a Pockels cell, a Faraday cell, and/or a Kerr cell.

**24.** The microscope as defined in any one of claims 16 to 23,
**characterized in that**
said intensity modulator has a spatial light modulator (25).

**25.** The microscope as defined in claim 24,
**characterized in that**
said spatial light modulator (25) is disposed away from a detection beam path.

**26.** The microscope as defined in any one of claims 16 to 25,
**characterized in that**
said regulating device (60) is formed by a real time computer.

**27.** The microscope as defined in any one of claims 16 to 26,
**characterized in that**
said regulating device (60) is formed by an analog control circuit (62, 64).

**28.** The microscope as defined in any one of claims 16 to 27,
**characterized in that**
said light source (10) is thus equipped for exciting a plurality of different dyes to emit excitation light (22) having a plurality of wavelengths.

**29.** The microscope as defined in any one of claims 16 to 28,
**characterized in that**
a plurality of detectors is present for quantitative and point-specific determination of the light (42) reflected by said specimen in a plurality of spectral ranges.

**Revendications**

**1.** Procédé pour faire fonctionner un microscope, en particulier selon l'une des revendications 16 à 29, pour lequel de la lumière d'excitation (22) est focalisée ou émise sur ou dans différents points (41) d'un échantillon (40), pour lequel une intensité de la lumière d'excitation (22) est variée de manière spécifique à chaque point et pour lequel une intensité de la lumière (42) renvoyée par l'échantillon (40) est mesurée quantitativement et de manière spécifique à chaque point et dans au moins une plage spectrale, **caractérisé en ce que** l'intensité et/ou une composition spectrale de la lumière d'excitation (22) incidente en un point déterminé (41) de l'échantillon est automatiquement réglée avec un dispositif de régulation (60) en fonction d'une information préalablement obtenue à partir de données de mesure de l'échantillon (40) sur une intensité estimée ou effective de la lumière (42) renvoyée par ce point (41) dans la plage spectrale de sorte qu'une intégrale de l'intensité de la lumière (42) renvoyée par ce point (41) dans la plage spectrale sur un temps de séjour de pixels se situe dans un intervalle de valeur à déterminer, et l'information sur l'intensité estimée de la lumière (42) renvoyée par un point (41) est obtenue par une mesure initiale au début d'un temps de séjour de pixels de l'intensité de la lumière (42) renvoyée par ce point (41) et

le dispositif de régulation (60) règle l'intensité de la lumière d'excitation pendant le temps de séjour de pixels.

2. Procédé selon la revendication 1, **caractérisé en ce que**

le dispositif de régulation (60) règle l'intensité de la lumière d'excitation (22) pour un point déterminé (41) de sorte que l'intégrale de l'intensité de la lumière (42) renvoyée par ce point (41) sur un temps de séjour de pixels se situe dans un intervalle de valeur prédéterminé, seulement si un critère de signal est rempli pour ce point (41).

3. Procédé selon l'une des revendications 1 ou 2, **caractérisé en ce que**

la lumière d'excitation (22) comporte plusieurs longueurs d'onde pour l'excitation d'une pluralité de colorants différents et

l'intensité de la lumière (42) renvoyée par l'échantillon (40) est mesurée dans une pluralité de différentes plages spectrales.

4. Procédé selon l'une des revendications 1 à 3, **caractérisé en ce que**

l'intervalle de valeur est déterminé pour l'intégrale de l'intensité de la lumière (42) renvoyée par un point (41) sur un temps de séjour de pixels de sorte qu'un détecteur utilisé (50) fonctionne avec la meilleure sensibilité possible et le meilleur rapport signal sur bruit possible.

5. Procédé selon l'une des revendications 1 à 4, **caractérisé en ce que**

la régulation est réalisée de sorte que l'intensité de la lumière d'excitation (22) pour un point déterminé (41) sur un temps de séjour de pixels reste constante autant que possible après une phase transitoire de la régulation.

6. Procédé selon l'une des revendications 1 à 5, **caractérisé en ce que**

la régulation est réalisée de sorte que l'intégrale de l'intensité de la lumière (42) renvoyée par un point (41) sur un temps de séjour de pixels soit constante , en particulier pour tous les points qui remplissent un critère de signal.

7. Procédé selon l'une des revendications 1 à 6, **caractérisé en ce que**

le même temps de séjour de pixels est utilisé pour tous les points.

8. Procédé selon l'une des revendications 1 à 7, **caractérisé en ce que**

pour tous les points, pour lesquels un critère de signal est rempli, le même temps de séjour de pixels est utilisé.

9. Procédé selon l'une des revendications 2 à 8, **caractérisé en ce que**

le critère de signal est rempli pour un point déterminé (41) lorsque l'intensité estimée ou effective de la lumière (42) renvoyée par ce point (41) se situe au-dessus d'un seuil d'arrière-plan à fixer.

10. Procédé selon l'une des revendications 2 à 9, **caractérisé en ce que**

le critère de signal est rempli pour un point déterminé (41) lorsqu'un signal spécifique à chaque point amené en externe présente une valeur à déterminer.

11. Procédé selon l'une des revendications 1 à 10, **caractérisé en ce que**

une image test ou un scan test est enregistré pour déterminer grossièrement l'intensité de la lumière (42) renvoyée par des points individuels (41).

12. Procédé selon l'une des revendications 1 à 11, **caractérisé en ce que**

l'échantillon (40) est éclairé de manière pulsée et un taux d'impulsion de la lumière d'excitation (22) est adapté à une durée de relaxation à partir d'états de triplet des colorants, avec lesquels l'échantillon (40) est préparé.

13. Procédé selon l'une des revendications 3 à 12, **caractérisé en ce que**

l'intensité et/ou la composition spectrale de la lumière d'excitation (22) incidente en un point déterminé de l'échantillon (40) est automatiquement réglée avec le dispositif de régulation (60) en fonction d'informations préalablement obtenues à partir de données de mesure de l'échantillon (40) sur des intensités estimées ou effectives de la lumière (42) renvoyée par ce point (41) dans les différentes plages spectrales de sorte que des intégrales des intensités de la lumière renvoyée par ce point dans les différentes plages spectrales sur un temps de séjour de pixels se situent dans des intervalles de valeur qui sont à déterminer respectivement individuellement pour les différentes plages spectrales.

14. Procédé selon l'une des revendications 3 à 13, **caractérisé en ce que**

une décomposition des intensités mesurées pour les différentes plages spectrales est réalisée dans des parties appartenant aux colorants respectifs, cette décomposition est réalisée sur la base d'informations connues sur des spectres d'émission des différents colorants et en tenant compte de la position et la largeur des plages spectrales et pour les différents colorants, respectivement un facteur de pondération est déterminé à partir de respectivement au moins une partie d'intensité appartenant à une plage spectrale du colorant respectif.

15. Procédé selon l'une des revendications 3 à 14, **caractérisé en ce que**
les intervalles de valeur pour les différentes plages spectrales sont déterminés de sorte que les facteurs de pondération pour chaque colorant se situent dans un intervalle de valeur ou présentent une valeur à déterminer, dans lequel l'intervalle de valeur ou la valeur pour les différents colorants est à déterminer respectivement individuellement.

16. Microscope, en particulier pour la réalisation du procédé selon l'une des revendications 1 à 15,
avec une source de lumière (10) pour l'émission de la lumière d'excitation (22) pour l'examen microscopique d'un échantillon (40),
avec un modulateur d'intensité (20) pour varier une intensité de la lumière d'excitation (22),
avec une optique de microscope (30) pour guider la lumière d'excitation (22) sur différents points de l'échantillon à examiner (40) et pour guider la lumière (42) renvoyée par les différents points (41) de l'échantillon (40) sur un détecteur (50), avec le détecteur (50) pour la détection quantitative et spécifique à chaque point de l'intensité de la lumière (42) renvoyée par l'échantillon (40) dans au moins une plage spectrale et
avec un dispositif de régulation (60) qui coopère avec le modulateur d'intensité (20) et le détecteur (50),
**caractérisé en ce que**
le dispositif de régulation (60) est configuré pour régler automatiquement l'intensité et/ou une composition spectrale de la lumière d'excitation (22) incidente sur un point (41) de l'échantillon (40) en fonction d'une information préalablement obtenue à partir de données de mesure de l'échantillon (40) sur une intensité estimée ou effective de la lumière (42) renvoyée par ce point (41) dans la plage spectrale de sorte qu'une intégrale de l'intensité détectée par le détecteur (50) pour ce point (41) de la lumière (42) renvoyée dans la plage spectrale sur un temps de séjour de pixels se situe dans un intervalle de valeur à fixer,
dans lequel l'information sur l'intensité estimée de la lumière (42) renvoyée par un point (41) peut être obtenue par une mesure initiale au début d'un temps de séjour de pixels de la lumière (42) renvoyée par ce point (41) et
le dispositif de régulation (60) est configuré pour régler l'intensité de la lumière d'excitation pendant le temps de séjour de pixels.

17. Microscope selon la revendication 16, **caractérisé en ce que**
le dispositif de régulation (60) est configuré pour régler l'intensité de la lumière d'excitation (22) pour un point déterminé (41) de sorte que l'intégrale de l'intensité de la lumière (42) renvoyée par ce point (41) sur un temps de séjour de pixels se situe dans un intervalle de valeur prédéterminé, seulement si un critère de signal est rempli pour ce point (41).

18. Microscope selon la revendication 16 ou 17, **caractérisé en ce que**
la source de lumière (10) est configurée pour émettre la lumière d'excitation (22) dans une pluralité de longueurs d'onde pour exciter une pluralité de différents colorants et
une pluralité de détecteurs est présente pour la détection quantitative et spécifique à chaque point de la lumière (42) renvoyée par l'échantillon est présente dans une pluralité de plages spectrales.

19. Microscope selon l'une des revendications 16 à 18, **caractérisé en ce que**
le microscope est un microscope à balayage, en particulier un microscope à balayage par points.

20. Microscope selon l'une des revendications 16 à 19, **caractérisé en ce que**
le microscope est un microscope à balayage par lignes.

21. Microscope selon l'une des revendications 16 à 19, **caractérisé en ce que**
le microscope est un microscope à champ large.

22. Microscope selon l'une des revendications 16 à 20, **caractérisé en ce que**
le microscope est un microscope à fluorescence, en particulier un microscope à fluorescence à réflexion totale interne.

23. Microscope selon l'une des revendications 16 à 22, **caractérisé en ce que**
le modulateur d'intensité (20) présente un AOTF, un AOM, une cellule de Pockels, une cellule de Faraday et/ou une cellule de Kerr.

24. Microscope selon l'une des revendications 16 à 23, **caractérisé en ce que**
le modulateur d'intensité présente un modulateur spatial de lumière (25).

25. Microscope selon la revendication 24, **caractérisé en ce que**
le modulateur spatial de lumière (25) est agencé en dehors d'un faisceau de lumière de détection.

26. Microscope selon l'une des revendications 16 à 25, **caractérisé en ce que**
le dispositif de régulation (60) est formé par un ordinateur en temps réel.

**27.** Microscope selon l'une des revendications 16 à 26, **caractérisé en ce que**
le dispositif de régulation (60) est formé par un circuit de commutation de régulation (62, 64) analogique.

**28.** Microscope selon l'une des revendications 16 à 27, **caractérisé en ce que**
la source de lumière (10) est aménagée afin d'émettre la lumière d'excitation (22) dans une pluralité de longueurs d'onde pour l'excitation d'une pluralité de différents colorants.

**29.** Microscope selon l'une des revendications 16 à 28, **caractérisé en ce que**
une pluralité de détecteurs sont présents pour la détection quantitative et spécifique à chaque point de la lumière (42) renvoyée par l'échantillon dans une pluralité de plages spectrales.

Fig. 1

EP 2 156 235 B1

Fig. 2

Fig. 3

Fig. 4

Fig. 5

Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0977069 B1
- WO 2004102249 A1
- DE 19957418 A1
- EP 1681589 A1
- US 20020109840 A1
- EP 0564178 A1
- US 5923466 A
- DE 10222359 B4

**In der Beschreibung aufgeführte Nicht-Patentliteratur**

- **KOESTER H.J. ; BAUR, D. ; UHL, R. ; HELL, S.W.** *Biophys. J.,* 1999, vol. 77 (4), 2226-2236
- **HOPT, A. ; NEHER, E.** *Biophys. J.,* 2001, vol. 80 (4), 2029-2036
- **DONNERT, G. ; EGGELING, C. ; HELL, S.W.** *Nat. Methods,* 2007, vol. 4 (1), 81-86
- *OPTICS LETTERS,* 01. Oktober 2007, vol. 32 (19
- **HOPT A. ; NEHER E.** *Biophys., J.,* vol. 80 (4), 2029-2036
- **DIXIT ; CYR.** *The Plant Journal,* 2003, vol. 36, 280-290
- **NEHER ; NEHER.** *Journal of Microscopy,* Januar 2004, vol. 213, 46-62